# EUROPEAN PATENT APPLICATION

(11) **EP 4 738 229 A1**
(43) Date of publication of application: **06.05.2026**
(21) Application number: 25212696.6
(22) Date of filing: 31.10.2025
(51) Int. Cl.: G06Q 40/12

(54) **AUTOMATED PROCESSING USING MACHINE LEARNING GENERATED GRAPH-BASED RULES**

(30) Priority: 31.10.2024 US 202418933816
(71) Applicant: ADP, Inc., Roseland, NJ 07068 (US)
(72) Inventor: SILVA, Allan Barcelos, Roseland, 07068 (US); WESTHELLE, Matheus, Roseland, 07068 (US); TOUNSI, Ash, Roseland, 07068 (US)
(74) Representative: Morrall, Jonathan Ian McLachlan

(57) **Abstract**

Technical solutions are directed to automating processing using machine learning and graph structure based rules. A processor can identify a graph data structure that connects, using semantic edges, a plurality of components in accordance with a taxonomy. The processor can detect, using the graph data structure, a change to a protocol used to perform an operation comprising one or more electronic transactions between electronic accounts related to the plurality of components. The processor can generate, using the graph data structure, responsive to detection of the change, one or more rules to perform the operation in accordance with the change to the protocol. The processor can construct a prompt with the one or more rules and at least a portion of an electronic document. The processor can execute, using a model trained with a generative machine learning technique, the operation based on the prompt.

## Description

### TECHNICAL FIELD

This application is generally related to computing technology, and particularly to a computing technology solution for automated payroll processing using machine learning.

### BACKGROUND

Data processing technologies can automatically make decisions, provide predictive analytics, and streamline data management. However, as the data relationships and transactional processes within digital ecosystems become increasingly intricate, it can be challenging for data processing systems to effectively, efficiently, and reliably navigate such interdependencies while accurately and consistently making automatic decisions and predicting analytics.

### SUMMARY

The technical solutions described herein automate processing operations using a machine learning (ML)-generated graph structure to navigate the complexities of diverse and multi-jurisdictional tax documentation, utilizing rules derived from the graph structure taxonomy to process electronic transactions within payroll systems. For example, the technical solutions can improve the accuracy and reliability with which data processing systems can process complex interrelationships. Thus, the technical solutions facilitate the data processing systems (computing systems) to operate in an efficient manner, thereby improving the accuracy and reliability with which the data processing systems can automatically make decisions and predict analytics. To do so and recognizing that hardcoding changes is impractical and resource-intensive, the technical solutions establish a payroll taxonomy ontology that formalizes relationships between components such as tax documentation forms and computation steps. By employing large language models (LLMs), the graph structure facilitates the automatic generation of rules for processing electronic transactions according to payroll protocols, thereby enhancing compliance and accuracy. This technology significantly improves the effectiveness, availability, and energy efficiency of processing (e.g., payroll processing) by automating the interpretation of tax documents and calculating tax payments or deductions based on client account data.

An aspect of the technical solutions can be directed to a system. The system can include one or more processors coupled with memory. The one or more processors can identify a knowledge graph data structure that connects, using semantic edges, a plurality of components in accordance with a taxonomy. The one or more processors can detect, using the knowledge graph data structure, a change to a protocol used to perform an operation comprising one or more electronic transactions between electronic accounts related to the plurality of components. The one or more processors can generate, using the knowledge graph data structure, responsive to detection of the change, one or more rules to perform the operation in accordance with the change to the protocol. The one or more processors can construct a prompt with the one or more rules and at least a portion of an electronic document. The one or more processors can execute, using a model trained with a generative machine learning technique, the operation based on the prompt.

The one or more processors can be configured to identify a dataset comprising documents for electronic transactions for a plurality of payroll processes. The one or more processors can be configured to determine, using the dataset, the components corresponding to electronic transactions for each of the plurality of payroll processes. The one or more processors can be configured to determine, using the dataset, the semantic edges defining relationships between the components. The one or more processors can be configured to generate, using the components and the semantic edges, the knowledge graph data structure for the plurality of payroll processes.

The one or more processors can be configured to identify metadata corresponding to an electronic account for which the operation is to be executed. The one or more processors can be configured to identify, based on the metadata, one or more components from the plurality of components that correspond to the operation for the electronic account. The one or more processors can be configured to construct the prompt, using the metadata and the one or more components, for the operation to be executed.

The plurality of components can include portions of documents corresponding to processing of taxes for an electronic account of the electronic accounts. The electronic account can correspond to at least one of an enterprise or an employee of the enterprise. The semantic edges can include at least one of: a hierarchical semantic edge determined based on a hierarchy of two or more components, a causal semantic edge representing a cause-and-effect relationship between two or more components, or a temporal semantic edge indicative of a timing of events corresponding to two or more components.

The knowledge graph data structure can be represented in a JavaScript Object Notation (JSON) format and the components, and the semantic edges are represented using JSON objects. The one or more processors can be further configured to receive a document including updated regulations impacting the electronic transactions. The one or more processors can be configured to identify, based on the document, the change to the protocol and update the knowledge graph data structure based on the identified change.

The one or more processors can be configured to generate a user interface for interacting with the knowledge graph data structure. The one or more processors can be configured to receive, via the user interface, an adjustment to at least one of a component of the plurality of components or a semantic edge of the semantic edges defining relationships between the plurality of components. The one or more processors can be configured to update, based on the adjustment, the knowledge graph data structure and display the updated knowledge graph data structure via the user interface.

The one or more processors can be configured to identify one or more machine learning (ML) models trained on a dataset of a plurality of documents for performing a plurality of electronic transactions according to a plurality of protocols. The one or more processors can be configured to generate, using the one or more ML models, the knowledge graph data structure. The one or more processors can be configured to identify a document for performing one or more electronic transactions not included in the plurality of documents. The one or more processors can be configured to update, based on the document input into the one or more ML models, the knowledge graph data structure.

The one or more processors can be configured to identify a geographical area corresponding to an electronic account of the electronic accounts. The one or more processors can be configured to select the protocol responsive to a match of a geographical data of the protocol with the geographical area corresponding to the electronic account. The knowledge graph data structure can include components and semantic edges corresponding to a plurality of protocols comprising the protocol. The plurality of protocols for operations can correspond to a plurality of geographical areas comprising the geographical area.

An aspect of the technical solutions is directed to a method. The method can include one or more processors coupled with memory identifying a knowledge graph data structure that connects, using semantic edges, a plurality of components in accordance with a taxonomy. The method can include detecting, by the one or more processors, using the knowledge graph data structure, a change to a protocol used to perform an operation comprising one or more electronic transactions between electronic accounts related to the plurality of components. The method can include generating, by the one or more processors, using the knowledge graph data structure, responsive to detection of the change, one or more rules to perform the operation in accordance with the change to the protocol. The method can include constructing, by the one or more processors, a prompt with the one or more rules and at least a portion of an electronic document. The method can include executing, by the one or more processors, using a model trained with a generative machine learning technique, the operation based on the prompt.

The method can include identifying, by the one or more processors, a dataset comprising documents for electronic transactions for a plurality of payroll processes. The method can include determining, by the one or more processors, using the dataset, the components corresponding to electronic transactions for each of the plurality of payroll processes. The method can include determining, by the one or more processors, using the dataset, the semantic edges defining relationships between the components. The method can include generating, by the one or more processors, using the components and the semantic edges, the knowledge graph data structure for the plurality of payroll processes.

The method can include identifying, by the one or more processors, metadata corresponding to an electronic account for which the operation is to be executed. The method can include identifying, by the one or more processors, based on the metadata, one or more components from the plurality of components that correspond to the operation for the electronic account. The method can include constructing, by the one or more processors, the prompt for the operation to be executed using the metadata and the one or more components.

The method can include receiving, by the one or more processors, a document including updated regulations impacting the electronic transactions. The method can include identifying, by the one or more processors, based on the document, the change to the protocol. The method can include updating, by the one or more processors, the knowledge graph data structure based on the identified change.

The method can include generating, by the one or more processors, a user interface for interacting with the knowledge graph data structure. The method can include receiving, by the one or more processors, via the user interface, an adjustment to at least one of a component of the plurality of components or a semantic edge of the semantic edges defining relationships between the plurality of components. The method can include updating, by the one or more processors, based on the adjustment, the knowledge graph data structure. The method can include displaying, by the one or more processors, the updated knowledge graph data structure via the user interface.

The method can include identifying, by the one or more processors, one or more machine learning (ML) models trained on a dataset of a plurality of documents for performing a plurality of electronic transactions according to a plurality of protocols. The method can include generating, by the one or more processors, using the one or more ML models, the knowledge graph data structure. The method can include identifying, by the one or more processors, a document for performing one or more electronic transactions that is not included in the plurality of documents. The method can include updating, by the one or more processors, based on the document input into the one or more ML models, the knowledge graph data structure.

An aspect of the technical solutions is directed to a non-transient computer readable medium comprising processor readable instruction. The instructions, executed by one or more processors, can cause the one or more processors to identify a knowledge graph data structure that connects, using semantic edges, a plurality of components in accordance with a taxonomy. The instructions, executed by one or more processors, can cause the one or more processors to detect, using the knowledge graph data structure, a change to a protocol used to perform an operation comprising one or more electronic transactions between electronic accounts related to the plurality of components. The instructions, executed by one or more processors, can cause the one or more processors to generate, using the knowledge graph data structure, responsive to detection of the change, one or more rules to perform the operation in accordance with the change to the protocol. The instructions, executed by one or more processors, can cause the one or more processors to construct a prompt with the one or more rules and at least a portion of an electronic document. The instructions, executed by one or more processors, can cause the one or more processors to execute, using a model trained with a generative machine learning technique, the operation based on the prompt.

### BRIEF DESCRIPTION OF THE DRAWINGS

Aspects of the technical solutions are described in the detailed description which follows, in reference to the noted plurality of drawings by way of non-limiting examples of exemplary embodiments of the technical solutions described herein.
FIG. 1 depicts an example of a system for automating payroll processing using machine learning and knowledge graph based rules.
FIG. 2 depicts an architecture of a computing system implemented in embodiments of the technical solutions described herein.
FIG. 3 depicts a cloud computing environment 300 in accordance with aspects of the technical solutions described herein.
FIG. 4 depicts an example flow diagram of a method for providing automated payroll processing using ML models and operation protocols based on knowledge graph based rules.
FIG. 5 depicts a diagram of a taxonomy for a knowledge graph of FIG. 4.
FIG. 6 depicts an example of a flow diagram for ontology creation and data extraction of the method in FIG. 4.
FIG. 7 depicts user interface screenshots of the process involving an act of data extraction of the method in FIG. 6
FIG. 8 illustrates an example of a flow diagram of a method for executing operations according to the embodiments of the method in FIG. 4.
FIG. 9 illustrates an example of a form of a worksheet with instructions or steps for implementing the payroll operation in connection with the method in FIG 4.
FIG. 10 depicts an example of a form with computed and finalized payroll operation outputs based on the method in FIG. 4
FIG. 11 depicts a flow diagram of a method for automating payroll processing using machine learning and knowledge graph based rules.

### DETAILED DESCRIPTION

Following below are more detailed descriptions of various concepts related to, and implementations of, methods, apparatuses, and systems that automate processing using ML-generated graph structures based on which rules are generated for processing electronic transactions according to payroll processing protocols. The various concepts introduced above and discussed in greater detail below can be implemented in any of numerous ways.

The processing systems (e.g., payroll processing system) can operate based on a vast and intricate array of electronic tax documents, regulations, and guidelines stored in online data repositories that can differ significantly across various jurisdictions, such as countries, states, and cities. Frequent updates to federal, state, and local tax withholding documents and laws further complicate this landscape, while any non-compliance with specific tax regulations can result in serious consequences. As each jurisdiction can have its own distinct payroll policies expected to be meticulously applied to employees across multiple enterprises, often spanning multiple countries and regions, hardcoding such changes is impractical, resource-intensive, and energy-inefficient. While system updates can be implemented by retraining machine learning (ML) models with the modified data, continuously retraining such systems extends the system downtime and resource consumption, adversely impacting the system's effectiveness, availability, and energy efficiency.

The technical solutions overcome these challenges by automating processing (e.g., payroll processing) using ML-generated knowledge graph structure (e.g., knowledge graph or "KG") based on which rules are generated for processing electronic transactions according to payroll processing protocols. The technical solution can create a KG providing a payroll taxonomy ontology providing semantic edges (e.g., relationships) between various components (e.g., tax documentation forms, steps, items, tables, and text) for reliable payroll processing computations using large language models (LLMs). The ontology can formalize the payroll taxonomy. The KG can indicate, for example, relationships between different entries in the payroll processing forms based on a client account data (e.g., metadata of an employee of an enterprise) and in accordance with instructions for computing tax payments or deductions described in the documents. Using these relationships, values and instructions, the KG can be used to automatically generate rules for accurate payroll tax computations. The KG and LLMs can facilitate the processing and interpretation of tax documents, understanding the context and details for precise computations.

The KG can be generated by extracting the content from payroll tax documents and converting them into KG format, such as by reformatting tables, text, and worksheets into structured JSON data structures. The KG can provide representations of semantic relationships between tax document components, with the ontology providing consistency. The KG's integration with LLMs can facilitate consideration of document context and nuances. For example, the KG can identify relevant sections, extract tax rates and thresholds, and generate rules for calculating withholding amounts by analyzing document structures and content. The semantic relationships between the components of the KG can be hierarchical, causal, or temporal and can be explicitly stated or inferred based on the data.

The KG can handle various tax calculation methods, analyze relevant sections, extract information, and generate applicable rules. The technical solutions can apply these rules, computing tax amounts based on the income and tax situation of each client account (e.g., employee). LLM integration facilitates a deeper understanding of payroll tax documents' context and nuances, interpreting complex passages from the payroll documents (e.g., tax guidelines) to understand the rule implications and determine the unstated context to facilitate a comprehensive and accurate rule generation. As a result, using Knowledge Graphs and LLMs improves tax calculation accuracy over manual methods, and automating rule generation reduces time and effort, leading to efficient tax processing. The technical solutions scale to handle various tax documents and regulations, adapting to jurisdictions and law changes. The KG's ontology and semantic relationships provide deeper document understanding and are useful for compliance and auditing.

The technical solutions allow for a more expedient and compute and energy efficient adapting to new or changing tax regulations, allowing for maintaining compliance with current laws and regulations despite their frequent or unexpected updates, reducing legal or financial risks. Semantic relationships in the KG can identify potential document discrepancies, adding verification and validation layers to the system. For instance, when a new regulation creates a new dependency with respect to a new fact, feature, or process, the KG can infer a new relation and update the relations that are followed during the execution of the relevant process (e.g., protocol).

Such improved accuracy in tax calculations can improve compliance, reducing excessive, unnecessary, or erroneous electronic transactions. Automation can also allow for handling larger volumes of tax documents and calculations, suitable for organizations with complex payroll processing. The ontology and semantic relationships can improve payroll processing areas such as reporting and analysis, generating detailed tax calculation reports, and key trends for strategic decision-making. This can facilitate advancing statutory reasoning and tax computation while simplifying diverse payroll regulation management in accordance with compliance, reducing computational processing and improving system efficiency.

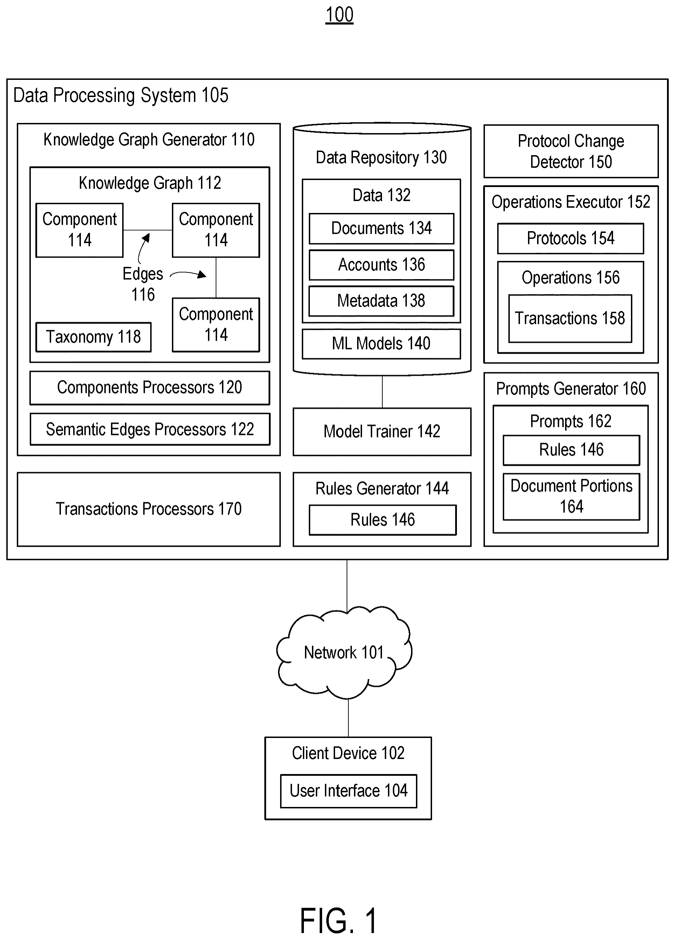

FIG. 1 depicts an example system 100 for automating payroll processing using machine learning and knowledge graph based rules. The system 100 can include a client device 102 which can include a user interface 104 (e.g., of an application), which a user can use to communicate with a data processing system 105 over a network 101. The client device 102 can send requests or instructions to the data processing system 105 to implement payroll operations, such as tax computations for an employee of an enterprise. Data processing system 105 can include one or more knowledge graph generators 110 that can generate, monitor, manage, and update one or more knowledge graphs 112 (KGs) 112. A KG 112 can include components 114 (e.g., entities, nodes, concepts, or items corresponding to payroll documentation) and semantic edges 116 defining relationships between the components 114, representing the overall taxonomy 118 based on which the payroll processes for various client accounts can be processed. The knowledge graph generator 110 can include one or more component processors 120 for generating, processing, or adjusting the components 114 and one or more semantic edges processors 122 for generating, processing, or adjusting the edges 116.

Data processing system 105 can include one or more data repositories 130 for storing, maintaining, and providing data 132. Data 132 can include various documents 134 (e.g., payroll processing forms, guidelines or laws, various client accounts 136, and metadata 138 for various users or entities associated with the accounts 136. Data repository 130 can store one or more ML models 140 (e.g., LLMs, NLPs, or transformers), which can be trained or used to implement any functionalities of the data processing system components. Data processing system 105 can include one or more model trainers 142 for training the one or more ML models 140. Data processing system 105 can include one or more rules generators 144 for creating or generating rules 146, according to which protocols 154 can be established and operations 156 can be implemented. Data processing system 105 can include one or more protocol change detectors 150 for detecting changes to the protocols 154 for processing operations 156 (e.g., changes to payroll documentation impacting the transactions 158 to be implemented in order to complete particular payroll operations). Data processing system 105 can include one or more operations executors 152 for executing transactions 158 to complete operations 156 according to their respective protocols 154. Data processing system 105 can include one or more prompts generators 160 for generating prompts 162 comprising rules 146 and document portions 164, for use for operating ML models 140. Data processing system 105 can include one or more transactions processors 170 for processing the transactions 158.

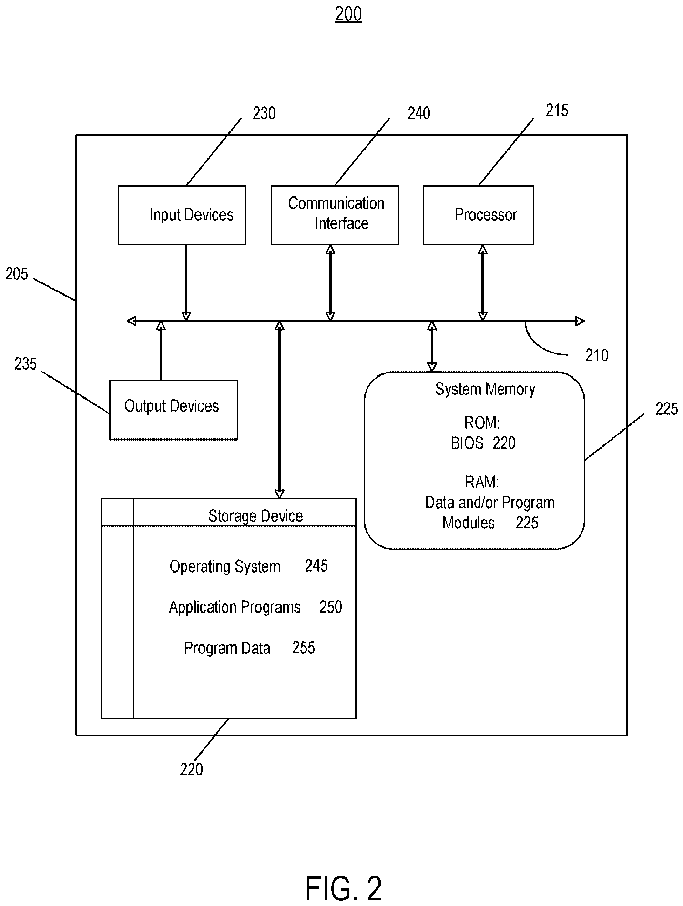

The data processing system 105 can include any combination of hardware and software for automating payroll processing using protocols 154 established based on rules 146 generated according to components 114 and edges 116 of a knowledge graph 112. Data processing system 105 can include a computing device or a system, such as a computing system 200 of FIG. 2. Data processing system 105 can include, or be provided via, one or more physical or virtual servers or machines, a cloud-based system (e.g., a software as a service), or any collection of one or more (e.g., a network of) physical or virtual computing devices. The data processing system 105 can be coupled, via a network 101, with any number of client devices 102 that can send to the data processing system different requests or instructions to process, compute, determine, or implement various payroll operations 156 for different accounts 136 based on the metadata 138 of specific accounts 138 and based on the protocols 154 determined according to the rules 146 generated from the KG 112 for the circumstances or conditions (e.g., metadata 138) of those accounts 136.

The data processing system 105 can include, or be communicatively coupled with (e.g., via a network 101), at least one logic device, such as one or more client devices 102. Data processing system 105 can be implemented on one or more processors (e.g., 215) based on instructions, data, or commands stored on system memory (e.g., 225) or a storage device (e.g., 220), which can be used to operate or cause the one or more processors to implement the functionalities of the data processing system 105. In some configurations, functions, such as transactions processors 170, can be deployed on separate computing systems (e.g., such as computing system 200 of FIG. 2), which can be deployed on a server, a virtual machine, or a cloud computing platform and coupled with the data processing system 105 via a network 101.

The network 101 can be a wireless or wired connection that enables the data processing system 105 to store, transmit, receive, or display information to identify, extract, and map a dataset from a first type to a second type. The data processing system 105 can communicate with internal subcomponents (described herein) or external components (e.g., the transactions processors 170 or the client device 102, among others) via the network 101. The data processing system 105 can store data about the system in the data repository 130. The data processing system 105 can receive the dataset (e.g., data 132) transmitted from the data repository 130. The network can include a hardwired connection (e.g., copper wire or fiber optics) or a wireless connection (e.g., wide area network (WAN), controller area network (CAN), local area network (LAN), or personal area network (PAN)). For example, the network 101 can include Wi-Fi, Bluetooth, BLE, or other communication protocols for transferring over networks as described herein.

The client device 102 can include any computing device that can be used by a client, individual, or a user (e.g., an employee) associated with one or more accounts 136. A user can use the client device 102 for updating the documents 134 (e.g., from various databases providing local rules, laws, or guidelines of payroll processing based on a geographical area, such as a country, county, or city). The client device 102 can be or can include any computing device such as a laptop, a desktop computer, a smart phone, or a tablet. A user of the client device 102 can operate, display, or otherwise execute an application (e.g., a web browser or one or more agents of the automated processing functions 116 or a data processing system 105) via the client device 102. The client device 102 can include, or be coupled with, storage or memory (e.g., 225).

The client device 102 can include a user interface 104, such as a window or a prompt of an application executed on the client device 102 to communicate with and utilize features of the data processing system 105. The user interface 104 can provide a user with one or more windows to request access to transactions processors 170 to implement various operations 156 according to their respective protocols 154. The client device 102 can allow a user to utilize a user interface to access any functionality of a data processing system 105, including data repository 130, transactions processors 170 or operations executor 152 and trigger processing of various payroll operations. For instance, a user can utilize a graphical user interface (GUI) on a user interface 104 to request or initiate payroll processing (e.g., annual tax computation, automated payment processing, or an employee monthly retirement plan contribution). The client device 102 can provide new documents 134 providing updated information to be used to update the knowledge graph 112.

The user interface 104 can be configured to provide access to a knowledge base data structure 112. For instance, an application for providing interaction between a client device 102 and a data processing system 105 can provide or generate a user interface 104 for interacting with the knowledge graph data structure 112. The client device 102 or its user can receive, via the user interface, an adjustment to at least one of a component 114 of the plurality of components 114 or a semantic edge 116 of the semantic edges 116 defining relationships between the plurality of components 114. The knowledge graph generator 110 can update, based on the adjustment, the knowledge graph data structure 112 and provide an output for the user interface 104. The user interface 104 can display on the client device 102, for the view by the user, the updated knowledge graph data structure 112.

The data processing system 105 can include, generate, maintain, manage, and operate a knowledge graph (KG) 112. A KG 112, also referred to as a knowledge graph data structure 112, can include any data structure or any structured data representation capturing or representing information (e.g., overall information on processing payroll operations, such as tax processing) in the form of a network of interconnected entities (e.g., components 114) and the relationships between such entities (e.g., edges 116). The knowledge graph data structure 112 can be implemented using any knowledge graph platform, such as JavaScript Object Notation (JSON), resource description framework (RDF), extensible markup language (XML), GraphML, Turtle, YAML, or any other knowledge graph supporting tool. The knowledge graph 112 can be implemented using vector representations, such as by representing components 114 and edges 116 using vector representations in a vector space of the knowledge graph. The knowledge graph 112 can utilize the vector space to compare the vector representations 114 or edges 116 with any document portions 164 of any new or updated documents 134 identified or uncovered in order to identify any changes to the protocols 154.

The KG 112 can include components 114 that represent various elements of documents 134, such as U.S. federal tax W-2 forms, 1099 forms, payroll tax withholding forms, direct deposit authorization forms, or employee time sheets. The components 114 can correspond to specific portions of documents 134 describing particular steps, actions, or conditions in the process of computing particular payroll operations 156 represented in the KG 112. The edges 116 of the KG 112 can describe the relationships between such components 114, describing the hierarchy, order, or any associative, causal, hierarchical, or any other relation between the components 114. These edges 116 can define, describe, or inform relations between different components 114 for all the payroll processing documents 134 can provide the knowledge graph 112 and its taxonomy 118. It can function by utilizing machine learning algorithms to generate and update the graph dynamically, allowing for real-time adjustments based on changes in tax regulations or payroll protocols. For example, the KG can link an employee's tax documentation to specific payroll calculations, ensuring accurate compliance with jurisdictional requirements. This interconnected structure can enable efficient data retrieval and processing, facilitating automated payroll operations.

Component 114 of the KG 112 can be any entity or node representing a specific element or an act related to an operation 156 for processing payroll. Component 114 can include or correspond to a particular entity indicative of a transaction 158 to be implemented as a part of a plurality of transactions 158 of a particular payroll operation 156. For instance, a component 114 can include a particular act or a step for processing of an operation 156, such as a computation of taxes for a tax form filing, direct deposit processing, payroll report generation, employee time tracking or a benefits deduction calculation. Each component 114 can serve as a discrete unit of information that can be processed or analyzed independently. A plurality of components 114 can be arranged or ordered based on a protocol 154 and in accordance with the taxonomy 118 and metadata 138 of the client account (e.g., personal information or data of the employee associated with the account). For instance, a component 114 may include, correspond to, or depending on attributes, such as an employee name, salary, and tax status, while a tax form component 114 can include details about filing steps or computations of various entries of the tax form. Components 114 can work together (e.g., in an arrangement of a plurality of components 114) within the KG 112, arranged or ordered according to their edges 116 that define relationships, hierarchies, or order between them, in order to provide a comprehensive view of the payroll landscape.

Semantic edges 116, also referred to as edges 116, can include any connection that represents the relationship between two entities (e.g., components 114) of a knowledge graph 112. An edge 116 can include information or data that indicates how different components 114 relate to one another within a specific context of a taxonomy 118. Edges 116 can indicate how entities of the KG 112 (e.g., components 114) are interconnected with each other within the payroll processing framework. These edges 116 can capture the nature of the relationship, such as "is employed by," "has tax obligation," or "requires documentation for." For example, a semantic edge 116 can link an employee component (e.g., generated based on a metadata 138) to a specific tax form component (e.g., a document portion 164), which can indicate that the employee is to complete this form for compliance purposes. By establishing such relationships, semantic edges 116 can enhance the understanding of how various components 114 of the KG 112 interact with each other within the taxonomy 118 of the payroll processing structure.

Edges 116 can indicate or define various types of relationships between components 114. For instance, an edge 116 can be a hierarchical edge, in which an act or an object can be categorized as a subtype of another act or an object (e.g., a tax form can be categorized as a subtype of payroll documentation). An edge 116 can represent a causal relationship, in which one action leads to another (e.g., submitting a time sheet can trigger the initiation of payroll processing). An edge 116 can indicate a temporal relationship between components 114, such as a sequence of events (e.g., an employee's contract start date is to precede their first paycheck). An edge 116 can be an associative edge in which components 114 are connected based on their shared mutual relationship (e.g., an employee can be associated with multiple tax forms). Edges 116 can include or indicate a symmetric relationship in which the connection is mutual, such as an employee being both a manager and a subordinate to another employee. An edge 116 can indicate an antisymmetric relationship in which one component 114 applies to another, while the reverse may not hold true (e.g., a payroll policy may apply to specific employee classifications without implying the reverse).

Edges 116 can be expressly stated in the documents 134 or indicated by the documents (e.g., determined based on a processing by an ML model 140). Edges 116 denoting inferred relations can refer to connections that are derived from existing data and relationships within a knowledge graph, allowing for the identification of new relationships based on logical reasoning. Edges 116 denoting inherited relations can refer to relations are those that are passed down from parent components to child components within a hierarchical structure, ensuring that subcomponents automatically acquire characteristics or relationships defined at higher levels.

Taxonomy 118 can be any hierarchical classification system that organizes components 114 (e.g., entities) and their edges 116 (e.g., relationships) within a knowledge graph 112. Taxonomy 118 can provide a structured categorization of components 114 and facilitate efficient data retrieval and understanding of how these components interact through defined edges 116. Taxonomy 118 in a knowledge graph 112 can provide a hierarchical classification of components 114, organizing them into categories based on shared characteristics or functions relevant to payroll processing. This structured framework can allow for systematic categorization of components 114, such as different types of tax forms, employee classifications, and payroll procedures. For example, a taxonomy 118 may categorize tax forms into federal, state, and local types, each with its own set of requirements and guidelines as well as its own individual protocols 154. By organizing components in this way, taxonomy 118 can improve clarity and facilitate efficient navigation through the knowledge graph 112, making it easier to retrieve relevant information for specific payroll operations 156.

Knowledge graph generator 110 can include any combination of hardware and software designed to create, manage, and update KGs 112 by integrating data from various sources (e.g., documents 134) and establishing edges 116 (e.g., relationships) between components 114 (e.g., entities of the KGs 112). The knowledge graph generator 110 can include functions, instructions, or data configured to generate components 114 and their respective edges utilizing component processors 120 and semantic edges processors 120. The knowledge graph generator 110 can monitor or identify a knowledge graph data structure 112 that connects a plurality of components 114 in accordance with a taxonomy 118 and using semantic edges 116. For instance, the knowledge graph generator 110 can identify a set of data 132 (e.g., dataset of documents 134, accounts 136, and metadata 138) for electronic transactions for a plurality of payroll operations 156. The knowledge graph generator 110 can determine, using such a dataset, the components 114 corresponding to electronic transactions 158 for each of the plurality of payroll operations 156 as well as determine the semantic edges 116 defining relationships between the components 114. The knowledge graph generator 110 can generate the knowledge graph data structure 112 for the plurality of payroll operations using the components and the semantic edges.

The knowledge graph generator 110 can be configured to monitor for and detect a change to a protocol 154 used to perform an operation 156 comprising one or more electronic transactions 158 between electronic accounts 136 related to the plurality of components. The knowledge graph generator 110 can detect the change to a protocol 154 using a knowledge graph data structure 112, such as by observing and detecting changes to the taxonomy 118, based on changes to any one or more of components 114 or edges 116. The knowledge graph generator 110 can utilize ML models 140, which can be trained to analyze incoming data, automatically generating components that represent real-world components 114 while defining semantic edges 116 that illustrate their interconnections. For example, the knowledge graph generator 110 can process payroll documentation 134 to create components 114 for employees and tax forms, linking them through edges 116 that denote relationships such as "is employed by" or "requires documentation for." The knowledge graph generator 110 can operate together with, or utilize, a protocol change detector 150 to monitor changes in data sources and verify that the knowledge graph 112 remains current and reflective of the latest information.

Components processors 120 can include any combination of hardware and software for generating, processing, or updating components 114 of a KG 112. Components processor 120 can include a specialized unit of the knowledge graph generator 110 configured for generating and processing the individual components 114 based on documents 134. The components processor 120 can take input data, such as payroll documentation 134, and create corresponding components that represent entities like employees, tax forms, or payroll policies. For instance, when a new employee is added to the system, the components processor 120 can generate an employee component 114 that includes relevant attributes such as name, salary, and tax status, as well as actions taken while processing operations, such as assigning the employee to specific payroll categories, calculating initial tax withholdings, and generating necessary documentation for compliance with payroll regulations of a particular country, region, county, city or any other geographical area.

Semantic edges processors 122 can include any combination of hardware and software for generating, processing, establishing, or adjusting edges 116 (e.g., relations or relationships) between various components (e.g., entities) of a KG 112. The semantic edges processor 122 can include functions, instructions, or data configured to generate or establish specific relationships between components 114 for processing a series of transactions 158 of an operation 156 according to a particular protocol 154. The semantic edges processor 122 can establish semantic edges 116 that define how components 114 are interconnected, such as linking an employee component to their respective tax form component, establishing which transactions or determinations are to be completed prior to completing others, determining which transactions 158 are suitable for accounts 136 whose metadata 138 correspond to a particular tax bracket (e.g., based on income amount). For example, when a new tax regulation is introduced, the semantic edges processor 122 can create or modify edges 116 to reflect the updated relationships between entities in the payroll system.

Data repository 130 can include any memory, storage, or cache for storing data 132, such as documents 134, client accounts 136, metadata 138 of various users or any other information used by the data processing system 105. The data repository 130 can include a non-transitory computer-readable medium. The data repository 130 can store data 132, such as a dataset, and provide access to it by any components of the data processing system 105, such as the protocol change detector 150, operations executor 152, prompts generator 160, rules generator 144, or model trainer 142. The data repository 130 can store ML models 140, such as generative artificial intelligence (AI) models, natural language processing (NLP) models, large language models (LLMs), transformers, or any other ML-based models, functions, or features.

The data repository 130 can provide storage via any type or kind of memory, such as a cloud or hard drive. The data repository 130 can include or utilize, for example, random access memory (RAM), dynamic random-access memory (DRAM), static random-access memory (SRAM), error correcting code (ECC), read only memory (ROM), programmable read only memory (PROM), or electrically erasable read only memory (EEPROM). The information or data structures (e.g., tables, lists, or spreadsheets) contained within the data repository 130 can be dynamic and change periodically (e.g., daily or every millisecond); via information from the server (e.g., through batch processing, real-time streaming, webhooks, scheduled jobs, incremental updates, database triggers, API requests, or version control systems, among others), via an input from a user (e.g., a user operating the client device 102), via information from the data repository 130, or the client device 102, transmitted through the network 101, via inputs from subcomponents of the data processing system 105 or via an external update to the system 100. For example, the ML models 140 within the data repository 130 can change or be updated responsive to an indication, instruction or data from the model trainer 142 or new processes or outputs from any transactions processors 170 that can update any data 132 within the data repository 130.

Within the data repository 130, stored data 132 can include any documents 134 that can be used for payroll processing and compliance management. Documents 134 can be documents comprising various document portions 164 directed to particular individual tasks, such as specific transactions 158 processed as a part of an operation 156 implemented according to a protocol 154. Documents 134 can include a wide range of formats and types, comprising any information in any format, and for any payroll processing action of the data processing system 105. Documents 134 can describe or include information on any transactions 158 (e.g., calculating gross pay, computing payroll taxes, issuing payments to employees, tracking employee hours, processing benefit deductions, managing direct deposits, generating payroll reports, filing payroll tax forms, updating employee records, or processing wage garnishments). The documents 134 can include any type of documents, such as tax forms, payroll processing guidelines, direct deposit authorization forms, employee contracts, or time sheets. The documents 134 can include employee enrollment forms, W-2 forms, 1099 forms, employee handbooks, state-specific tax withholding guidelines, rules or forms, payroll audit reports, expense reimbursement requests, health insurance documentation, garnishment orders, and training certification records.

Accounts 136 can include individual or organizational entities within the payroll processing system, encompassing various attributes and information necessary for effective management and compliance. Accounts 136 can include employee accounts storing confidential or personal details of an employee, such as metadata 138. For example, account 136 can include a name, an address, bank account routing numbers, a social security number, or employment information like job title, salary, and tax withholding preferences. Accounts 136 can include payroll-related data, including direct deposit information, benefits enrollment details, and accrued leave balances. Account 136 can serve as a digital identity through which, or using which, various transactions and interactions can be processed on behalf of the account holder, such as the employee. For instance, account 136 can allow for automated processing functions 116 to process transactions such as leave entitlements (e.g., vacation days, personal time off, annual leaves, sickness entitlements or sick days, timesheets data, overtime data), compensation computations (e.g., salary, benefits, retirement contributions, overtime, stock or options computations) or any other payroll, human resources, and other administration related transactions and processes. For example, an employee account 136 may include records of hours worked, overtime calculations, and deductions for health insurance or retirement contributions. Accounts 136 can include contractor accounts that track payments and tax forms like 1099s, as well as organizational accounts that manage payroll expenses and compliance with federal and state regulations.

Metadata 138 can include any data providing context and details about the various components, documents, and accounts within the payroll processing system or information about users of accounts 136. The metadata 138 can include descriptive attributes such as creation dates, modification timestamps, and authorship information, which help track changes and maintain an audit trail. For example, metadata 138 can specify the type of document (e.g., W-2 form or employee contract), its status (e.g., pending approval or archived), and relevant tags that categorize it for easier retrieval. Metadata 138 can include information about a user of the account 136, such as the annual income of an employee, employee pretax withholding information, retirement account contributions, 401 settings, or any other account related metadata. The metadata 138 can include data lineage details that indicate the source of information, such as whether it was manually entered or imported from another system.

Rules 146 can include any guideline or directive that governs behavior or actions within a system. Rules 146 can outline conditions or criteria for compliance with a particular process, such as an execution of protocol 154. Rules 146 can be established by the rules generator 144 to regulate payroll processing operations 156. The rules 146 can be generated based on the taxonomy 118, including based on any relevant components 114 and semantic edges 116. Rules 146 can be generated based on the knowledge graph 112. Rules 146 can direct the order or arrangement of transactions 158 of one or more operations 156 according to the arrangement or order of components 114 based on the edges 116. Rules 146 can define an order or arrangement of processing transactions 158 of an operation according to a protocol 154. Rules 146 can be generated for, or can define or specify, a particular protocol 154 to perform a particular operation 156 (e.g., compute annual income tax for an employee or determine annual tax deductions for an enterprise).

Rules 146 can encompass a wide range of operational directives, such as stipulating when payroll should be processed, listing the order of particular transactions 158 of an operation 156, outlining conditions for employee classifications, or defining procedures for handling the processing of an operation 156. For instance, a rule 146 can specify that employees should submit their time sheets by a certain deadline to be included in the upcoming payroll cycle or establish parameters for calculating health insurance premiums based on employee salary levels. By implementing these rules 146, the payroll system can ensure that all operations are conducted in a compliant and efficient manner and according to a set protocol 154.

Rules generator 144 can include any combination of hardware and software for generating rules 146 based on knowledge graph 112. The rules generator 144 can include functions, instructions, or data configured to create and manage operational rules 146 that govern various processes and ensure compliance with regulations. The rules generator 144 can utilize predefined criteria and parameters to formulate rules 146 that dictate how payroll operations 156 should be executed, such as determining eligibility for overtime pay, setting thresholds for tax deductions, and defining conditions for employee benefits enrollment. For example, the rules generator 144 can establish guidelines for calculating bonuses based on performance metrics or specify the documentation required for tax compliance. The rules generator 144 can utilize ML models trained to generate rules 146 to process documents 134 and generate rules 146 to guide the system in implementing transactions 158 according to a particular predetermined or selected protocol 154.

The rules generator 144 can be configured to generate one or more rules 146 to perform an operation 156 corresponding to a protocol 154 in accordance with the change to the protocol 154. The rules generator 144 can generate the one or more rules to perform such an operation responsive to a detection of the change to the protocol 154, which a protocol change detector 150 can detect using the knowledge graph data structure 112. For instance, in response to detecting a change to a component 114 or edge 116 in a taxonomy 118 of a knowledge graph 112, the protocol change detector 150 can detect a change in a protocol 154. The rules generator 144 can, in response to such a detection, generate one or more new rules 146 or updates to prior rules 146 for the given protocol 154 to perform the operation 156 in accordance with the new or updated protocol 154. To process such an operation 156, the protocol change detector 150 can utilize a prompts generator 160 to construct or generate a prompt 162 using the newly generated or updated rules 146 and one or more document portions 164 (e.g., corresponding to changed or modified sections of documents 134 in response to which the KG 112 was modified). Such a prompt 162 can be used as an input to a generative AI model 140 to execute the operation 156, based on this prompt 162 and according to the new or updated rules 146.

The data processing system 105 can utilize a protocol change detector 150 to determine if any of the incoming documents 134 provided to the data repository 130 impact or change any of the protocols 154 used to perform any operations 156 (e.g., impact the transactions 158 of the operations 156). The protocol change detector 150 can include functions, instructions, or data configured to identify and respond to changes in payroll protocols 150 or operations 156 based on updates or changes to payroll documents 134. The data processing system 105 can determine whether or not a change in documents 134 triggers a change in protocol 154. For instance, data processing system 105 can determine that a change in documents 134 impacts transactions 158 or operations 156 in such a way as to trigger or cause a change in protocol 154. For instance, data processing system 105 can determine that a change in documents 134 does not impact transactions 158 or operations 156 to trigger or warrant a change in protocol 154.

For instance, data processing system 105 can receive a batch of documents 134, such as via a periodic scanning or downloading of documents 134 from various websites providing access to the most up-to-date versions of regional or country guidelines or instructions for payroll processing, such as tax processing. The protocol change detector 150 can process these documents 134 and detect changes between the documents 134 just acquired and the previously downloaded and stored documents 134 at the data repository 130. For instance, the protocol change detector 150 can detect changes to existing documents, such as a new version of a document updating some of the protocols 154 with respect to certain operations 156. For instance, the protocol change detector 150 can detect new documents 134, providing new protocols 154, which are not previously established operations 156. The protocol change detector 150 can continuously monitor incoming documentation, such as tax regulations or payroll guidelines, assessing their impact on existing processes and protocols. For example, if a new tax law that alters filing requirements is introduced, the protocol change detector can trigger updates to the relevant operational procedures to ensure compliance. For instance, the protocol change detector 150 can identify new document portions 164 within the acquired documents 134 and provide them to the knowledge graph generator 110. The knowledge graph generator 110 can utilize the components processor 120 and the semantic edges processor 122 to generate and establish new or updated components 114 and their corresponding edges 116, based on the document portions 164.

Operations executor 152 can include any combination of hardware and software for executing operations 156 and their transactions 158 according to protocols 154. Operations executor 152 can include functions, instructions, and data for executing specific payroll-related tasks and transactions 158 according to their established protocols 154, verifying that all operations are carried out efficiently and in compliance with regulations. The operations executor 152 can manage, control, or execute a variety of transactions and operations, including processing payroll runs, updating employee records, managing tax withholdings, and executing direct deposit payments. Operations executor 152 can include an agent that can implement, manage, and execute various transactions to complete the operation.

Operations executor 152 can operate with the protocol change detector 150 to establish, adjust, and manage protocols 154 for particular operations 156, such as by using the rules 146 of the rules generator 144. The operations executor 152 can execute operations 156 such as calculating bonuses based on performance metrics, generating payroll reports for management review, applying benefit deductions from employee salaries, and issuing year-end tax forms like W-2s. The operations executor 152 can utilize transaction processors 170 to facilitate real-time data processing and provide the execution of transactions, improving the overall efficiency and reliability of the payroll system.

Operations executor 152 can be configured to execute the operations using ML models 140. For instance, upon detecting a change to the protocol 154, a rules generator 144 can generate updated or new rules 146 to modify or update the protocol 154 according to the latest guidelines, rules, or laws as provided in the documents 134. The prompts generator 160 can generate the prompts 162 using the rules 146 and the documents portions 164 corresponding to the updated or changed content in the documents 134. The operations executor 152 can utilize such a prompt 162 as an input into the ML model 140 (e.g., generative AI model) to run the ML model 140 and perform or execute the updated operation 156 using, or based on, this new prompt 162. For instance, an operations executor 152 can identify one or more ML models 140 trained on a set of data 132 of a plurality of documents 134 for performing a plurality of electronic transactions 158 according to a plurality of protocols 154. The operations executor 152 can generate, using the one or more ML models 140, the knowledge graph data structure 112.

Operations 156 can include any tasks or activities executed by the operations executor 152 or carried out within the payroll processing system. Operations 156 can include one or more transactions 158, such as a sequence of transactions 158 executed according to rules 146 generated by the rules generator 144 based on the knowledge graph 112. Operations 156 can include a variety of transactions 158 that can be executed according to a particular arrangement or order (e.g., protocol 154) to implement compliance and accuracy in payroll management. For example, operations 156 can include processing employee payroll runs, calculating tax withholdings, managing benefit deductions, and issuing direct deposits. Operations 156 can include generating payroll reports for analysis, updating employee records with new information, applying wage garnishments as dictated by legal requirements, and reconciling discrepancies in payroll data. By adhering to the established rules 146, operations 156 can facilitate streamlined workflows and enhance the overall efficiency of the payroll system.

Transactions 158 can include any computations, acts of processing data, or any specific activities that occur within a payroll processing operation 156. Transactions 158 can include a range of computations for any one or more entries of any one or more forms to fill out or generate during an operation 156. Transactions 158 can include individual computations of any activity or step in the process of an operation 156, such as computing individual values in the course of recording payroll expenses, such as gross wages and associated taxes, managing accrued wages for employees who have earned but not yet received payment, or processing manual payments for adjustments or bonuses. A transaction 158 can include determining an individual value in a plurality of values to be determined in a particular order in order to perform the operation, such as when determining wage expenses while crediting payroll liabilities when recording the total payroll for a pay period. Transactions 158 can include issuing payments for overtime wages, adjusting entries for employee terminations, and remitting withheld taxes to government agencies across various geographical areas (e.g., different countries, states within countries, counties within states, or cities).

Prompt 162 can include any structured input for an ML model 140 that can be generated by a prompts generator 160. Prompt 162 can include a structured alphanumeric string of characters arranged or structured to elicit specific output from an ML model 140 based on the data included within the prompt. The prompt 162 can include instructions, commands, descriptions, textual components, values, or parameters that can be generated, designed, arranged, or selected to cause a particular output or performance by the ML model 140. The prompt 162 can include information or data, formatting or code, that can configure the prompt to focus an ML model 140, such as a generative AI model, into which the prompt 162 is provided as input, in order to focus or to concentrate the processing of the ML model 140 within a particular field or space, a particular set of training data or issues, or a particular operation 156 or a set of transactions 158.

Prompts generator 160 can include any combination of hardware and software for generating prompts 162. Prompts generator 160 can generate prompts 162 based on rules 146 or any document portions 164, such as portions of documents 134 identified as new or updated by a protocol change detector 150. Prompts generator 160 can include any tool (e.g., a computer code function) for creating structured input queries for managing outputs of the ML model 140 (e.g., prompts 162). Prompts generator 160 can include a software application or system designed to automatically generate prompts 162 for processing any one or more transactions 158 for any operations 156 and any protocols 154. Prompts generator 160 can generate prompts 162 based on rules 146 generated based on the taxonomy 118 of the knowledge graph 112. Prompts generator 160 can include functionalities for defining parameters, constraints, and specific instructions for the ML model 140 to execute operations 156 according to a protocol 154 defined by rules 146.

Upon detecting an update or change to a protocol 154 (e.g., based on a change to the KG 112), the rules generator 144 can generate new or update existing rules 146 to accommodate or implement the change to the protocol 154. In such instances, the prompts generator 160 can construct a prompt 162 with the one or more newly generated or updated rules 146 and at least a portion of an electronic document 134 (e.g., the document portion 164 including update or change to the protocol). The prompts generator 160 can operate together with the operations executor 152 to execute, using an ML model 140 trained with a generative machine learning technique, the operation 156 based on such a prompt 162.

The prompts generator 160 can generate the prompts 162 based on metadata 138 associated with electronic accounts 136 for which an operation 156 is executed. For instance, a prompts generator 160 can identify metadata 138 corresponding to an electronic account 136 for which the operation 156 is to be executed. The metadata 138 can include a name of the account owner, an account creation date, an account type, a last modified date, access permissions, account status, associated transactions, contact information, balance information, and user preferences. The metadata 138 can include account settings, such as a ratio of the income to contribute to a retirement or an investment fund, a portion of income to contribute to a particular account, or any other metadata 138. The prompts generator 160 can identify, based on the metadata 138, one or more components 114 from the plurality of components 114 that correspond to the operation 156 for the electronic account 136. The prompts generator 160 can construct the prompt 162 using the metadata 138 and the one or more components 114, for the operation 156 to be executed.

Machine learning model (140), which can also be referred to as models 140 or generative AI models 140, can include any computational framework that utilizes algorithms to learn patterns from data to make predictions or decisions based on new, unseen information without being explicitly programmed for each specific task. ML model (140) can be used for various tasks of the data processing system 105, such as generating knowledge graphs 112, executing payroll operations 156, generating components 114 or edges 116, generating rules 146, or implementing any transactions 158 or actions used for processing, such as detecting anomalies in payroll data, automating document classification, optimizing tax calculations, personalizing employee benefits recommendations, analyzing compliance risks or forecasting payroll expenses. The ML models 140 can include any combination of one or more neural networks, decision-making models, linear regression models, natural language models, random forests, classification models, generative AI models, reinforcement learning models, clustering models, neighbor models, decision trees, probabilistic models, classifier models, or other such models. For example, the models 140 include natural language processing (e.g., support vector machine (SVM), Bag of Words, Counter Vector, Word2Vec, k-nearest neighbors (KNN) classification, long short erm memory (LSTM)), object detection and image identification models (e.g., mask region-based convolutional neural network (R-CNN), CNN, single shot detector (SSD), deep learning CNN with Modified National Institute of Standards and Technology (MNIST), RNN based long short term memory (LSTM), Hidden Markov Models, You Only Look Once (YOLO), LayoutLM) (classification ad clustering models (e.g., random forest, XGBBoost, k-means clustering, DBScan, isolation forests, segmented regression, sum of subsets 0/1 Knapsack, Backtracking, Time series, transferable contextual bandit) or other models such as named entity recognition, term frequency-inverse document frequency (TF-IDF), stochastic gradient descent, Naive Bayes Classifier, cosine similarity, multi-layer perceptron, sentence transformer, data parser, conditional random field model, Bidirectional Encoder Representations from Transformers (BERT), among others.

The ML models 140 can include generative AI models, which can include any machine learning systems configured to create new content, such as text, images, or audio, by learning patterns from the data 132. The generative AI models 140 can be trained using techniques, such as supervised learning, unsupervised learning, and reinforcement learning. Generative AI models 140 can utilize dataset from data 132 to create logical inferences between various complex structures in the dataset to generate coherent outputs for prompts 162 input into the models 140.

The generative AI models 140 can include any machine learning (ML) or artificial intelligence (AI) model designed to generate content or new content, such as text, images, or code, by learning patterns and structures from existing data. The generative AI model 140 can be any model, a computational system, or an algorithm that can learn patterns from data (e.g., chunks of data from various input documents, computer code, templates, forms, etc.) and make predictions or perform tasks without being explicitly programmed to perform such tasks. The generative AI model 140 can refer to or include a large language model. The generative AI model 140 can be trained using a dataset of documents (e.g., text, images, videos, audio, or other data). The generative AI model 140 can be designed to understand and extract relevant information from the dataset. The generative AI model 140 can leverage natural language processing techniques and pattern recognition to comprehend the context and intent of the prompt 162, match it with relevant information in the training data, and generate a response that addresses the query.

The generative AI model 140 can be built using deep learning techniques, such as neural networks, and can be trained on large amounts of data. The generative AI model 140 can be designed, constructed, or include a transformer architecture with one or more of a self-attention mechanism (e.g., allowing the model to weigh the importance of different words or tokens in a sentence when encoding a word at a particular position), positional encoding, encoder and decoder (multiple layers containing multi-head self-attention mechanisms and feedforward neural networks). For example, each layer in the encoder and decoder can include a fully connected feed-forward network applied independently to each position. The data processing system 105 can apply layer normalization to the output of the attention and feed-forward sub-layers to stabilize and improve the speed with which the generative AI model 140 is trained. The data processing system 105 can leverage any residual connections to facilitate preserving gradients during backpropagation, thereby aiding in the training of the deep networks. Transformer architecture can include, for example, a generative pre-trained transformer, a bidirectional encoder representation from transformers, transformer-XL (e.g., using recurrence to capture longer-term dependencies beyond a fixed-length context window), text-to-text transfer transformer, etc.

The generative AI model 140 can be trained (e.g., by a model training function) using any text-based dataset by converting the text data from the input dataset documents into numerical representations (e.g., embeddings) of the chunks of those documents. These embeddings can capture the semantic meaning of words, paragraphs, pages or sentences, depending on the size and type of chunks of dataset documents are parsed into. Embeddings can be used to represent and organize the dataset documents within a high-dimensional space (e.g., embedding space), where similar documents or concepts are located closer together. Embedding space can include a multidimensional vector space where an embedding represents each data point.

Through training, the generative AI model 140 can learn or adjust its understanding of mapping the embeddings to particular issues (e.g., prompts related to resource availability or constraints concerning the resources) by adjusting its internal parameters. Internal parameters can include numerical values of the generative AI model 140 that the model learns and adjusts during training to optimize its performance and make more accurate predictions. Such training can include iteratively presenting the various data chunks or documents of the dataset (e.g., their chunks, embeddings) to the generative AI model 140, comparing its predictions with the known correct answers, and updating the model's parameters to minimize the prediction errors. By learning from the embeddings of the dataset data chunks, the generative AI model 140 can gain the ability to generalize its knowledge and make accurate predictions or provide relevant insights when presented with prompts 162.

The generative AI model 140 can include any ML or AI model or a system that can learn from a dataset to generate new content (e.g., text or images) that resembles a distribution of the training dataset. A distribution of a dataset can include an underlying probability distribution representing the patterns and characteristics of the data used to train a generative AI model 140. For example, a training data distribution can represent statistical properties of a text data (e.g., text corpus), such as the frequency of words, the co-occurrence of terms, and the overall structure of the language used in the training dataset. The generative AI model 140 can include the functionality to utilize such a probability distribution of patterns and characteristics to generate new responses (e.g., predictions) that were not present in the dataset.

The data processing system 105 includes a model trainer 142 designed, constructed, and operational to train, identify, or operate the ML models 140. The model trainer 142 can train the ML models 140 based on documents 134 or any data of accounts 136 or metadata 138. To train the ML models 140, the model trainer 142 can use one or more documents 134 and its document portions 164. The model trainer 142 can use the training dataset constructed from the documents 134 and train one or more ML models to identify and generate components 114 and edges 116. The model trainer 142 can generate the taxonomy 118 based on the documents 134. The model trainer 142 can train one or more ML models 140 to detect changes or updates in the documents 134 with the protocol change detector 150.

Transactions processors 170 can include any combination of hardware and software for processing any operations of a data processing system 105. The transactions processors 170 can include functions (e.g., processing applications) for executing various transactions 158 associated with payroll, human resource, or other transactional activities. Transactions processors 170 can execute the transactions 158 according to the protocols 154 implemented or enforced using rules 146 and based on data of accounts 136 or metadata 138 associated with the accounts 136. The transactions processors 170 can be customized for individual enterprises or based on rules 146 generated according to payroll laws or guidelines of geographical regions (e.g., countries, counties, states).

Transactions processors 170 can include any combination of hardware and software, including software applications or functions, for implementing transactions 158. Transactions processors 170 can include, for example, any payroll transaction processing functions, such as functions for processing transactions relating to computation of balances or amounts involving pay stubs, employee salaries, bonuses, or medical or other benefits, including medical leaves, employee vacations, or personal time off days. Transactions processors 170 can implement computations or transactions involving sickness entitlement, annual leave (e.g., annual leave balances), payment plans for parental leaves, forfeit of adjustments and balances, buying and selling of leave balances, public holiday adjustments and balances, timesheet to balances, overtime computations, or any other time-related or compensation related transactions or computations. Transactions processors 170 can include transactions for processing federal or state taxes, employee income taxes, monthly tax deductions, enterprise tax payments or any other tax related amounts for any geographical area, depending on the accounts 136 or metadata 138 associated with the account (e.g., employee's citizenship or residence). Transactions processors 170 can include functions for processing time entries, employee clock (e.g., start and stop work time), employee facility access card activity monitoring functions or any other functions associated with behavior or actions of users (e.g., employees) associated with the accounts 136. For example, transactions processors 170 can be configured to perform one or more payroll functions, such as payroll processing functions, human resource management functions, time and attendance tracking functions, benefits administration functions, talent management functions, or analytics and reporting functions, among others.

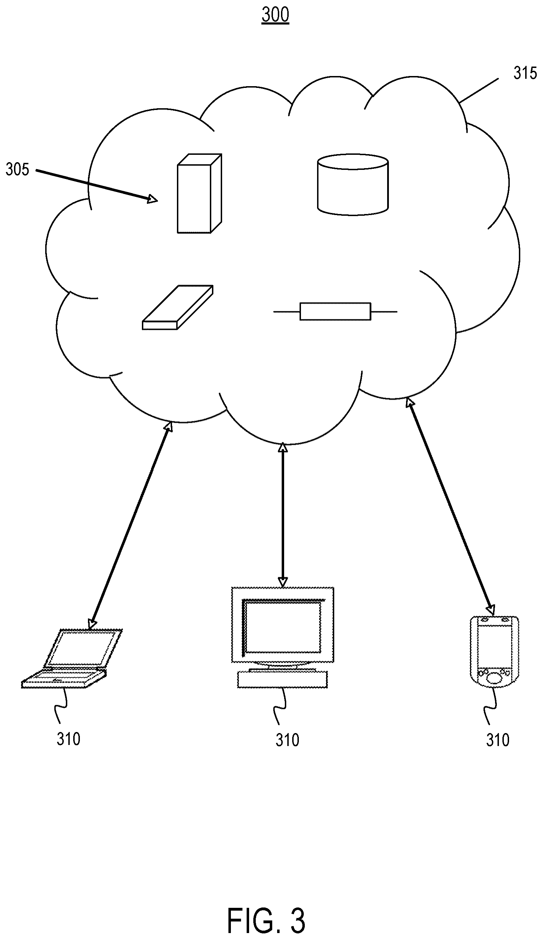

As shown in FIG. 2, computing system 200 includes a computing device 205. The computing device 205 can be resident on a network infrastructure such as within a cloud environment, as shown in FIG. 3, or can be a separate independent computing device (e.g., a computing device of a third-party service provider). The computing device 205 can include a bus 210, a processor 215, a storage device 220, a system memory (hardware device) 225, one or more input devices 230, one or more output devices 235, and a communication interface 240. One or more component of the computing system 200 can be part of or form the data processing system 105 displayed in example system 100 of FIG. 1.

The bus 210 permits communication among the components of computing device 205. For example, bus 210 can be any of several types of bus structures including a memory bus or memory controller, a peripheral bus, and a local bus using any of a variety of bus architectures to provide one or more wired or wireless communication links or paths for transferring data and/or power to, from, or between various other components of computing device 205.

The processor 215 can be one or more processors or microprocessors that include any processing circuitry operative to interpret and execute computer readable program instructions, such as program instructions for controlling the operation and performance of one or more of the various other components of computing device 205. In embodiments, processor 215 interprets and executes the processes, steps, functions, and/or operations of the technical solutions described herein, which can be operatively implemented by the computer readable program instructions.

For example, processor 215 provides an enterprise-wide security approach with all stakeholders (e.g., Dev teams, leadership, CSO office, etc.) with a set of various anomaly detection and transaction (e.g., payroll processing) integrity functionalities into single tool. In embodiments, the processor 215 uniformly integrates or packages existing functions for anomaly detection (e.g., using AI or other features) into a transaction integrity tool that standardizes and visually displays the output over different development teams for any purposes of anomaly detection or transaction integrity. The integrated security tool can capture specific requirements of the different teams, i.e., ensures that the tools support varied team development methodologies and different tech stacks to capture required security vulnerabilities. The processor 215 also establishes a regular feedback mechanism and can be used to develop a process for remediation timelines and priority including at risk vulnerabilities.

In embodiments, processor 215 can receive input signals from one or more input devices 230 and/or drive output signals through one or more output devices 235. The input devices 230 can be, for example, a keyboard, touch sensitive user interface (UI), etc., as is known to those of skill in the art such that no further description is required for a complete understanding of the technical solutions described herein. The output devices 235 can be, for example, any display device, printer, etc., as is known to those of skill in the art such that no further description is required for a complete understanding of the technical solutions described herein.

The storage device 220 can include removable/non-removable, volatile/non-volatile computer readable media, such as, but not limited to, non-transitory media such as magnetic and/or optical recording media and their corresponding drives. The drives and their associated computer readable media provide for storage of computer readable program instructions, data structures, program modules and other data for operation of computing device 205 in accordance with the different aspects of the technical solutions described herein. In embodiments, storage device 220 can store operating system 245, application programs 250, and program data 255 in accordance with aspects of the technical solutions described herein.

The system memory 225 can include one or more storage mediums, including for example, non-transitory media such as flash memory, permanent memory such as read-only memory ("ROM"), semi-permanent memory such as random-access memory ("RAM"), any other suitable type of storage component, or any combination thereof. In some embodiments, an input/output system 220 (BIOS) including the basic routines that help to transfer information between the various other components of computing device 205, such as during start-up, can be stored in the ROM. Additionally, data and/or program modules 225, such as at least a portion of operating system 245, application programs 250, and/or program data 255, that are accessible to and/or presently being operated on by processor 215 can be contained in the RAM.

The communication interface 240 can include any transceiver-like mechanism (e.g., a network interface, a network adapter, a modem, or combinations thereof) that enables computing device 205 to communicate with remote devices or systems, such as a mobile device or other computing devices such as, for example, a server in a networked environment, e.g., cloud environment. For example, computing device 205 can be connected to remote devices or systems via one or more local area networks (LAN) and/or one or more wide area networks (WAN) using communication interface 240.

As discussed herein, computing system 200 can be configured to integrate different anomaly detection and transaction integrity features into a single workbench or tool. This allows developers and other team members a uniform approach to assessing security vulnerabilities throughout the enterprise. In particular, computing device 205 can perform tasks (e.g., process, steps, methods and/or functionality) in response to processor 215 executing program instructions contained in a computer readable medium, such as system memory 225. The program instructions can be read into system memory 225 from another computer readable medium, such as data storage device 220, or from another device via the communication interface 240 or server within or outside of a cloud environment. In embodiments, an operator can interact with computing device 205 via the one or more input devices 230 and/or the one or more output devices 235 to facilitate performance of the tasks and/or realize the end results of such tasks in accordance with aspects of the technical solutions described herein. In additional or alternative embodiments, hardwired circuitry can be used in place of or in combination with the program instructions to implement the tasks, e.g., steps, methods and/or functionality, consistent with the different aspects of the technical solutions described herein. Thus, the steps, methods and/or functionality described herein can be implemented in any combination of hardware circuitry and software.

FIG. 3 shows an exemplary cloud computing environment 300 in accordance with aspects of the technical solutions described herein. In embodiments, one or more aspects, functions and/or processes described herein, including any features of the data processing system 105, can be performed and/or provided via cloud computing environment 300. As depicted in FIG. 3, cloud computing environment 300 includes cloud resources 305 that are made available to client devices 310 via a network 315, such as the Internet. Cloud resources 305 can be deployed or provided on a single network or a distributed network. Cloud resources 305 can be distributed across multiple cloud computing systems and/or individual network enabled computing devices. Cloud resources 305 can include a variety of hardware and/or software computing resources, such as servers, databases, storage, networks, applications, and platforms that perform the functions provided herein including storing code, anomaly detection and transaction integrity features or functionalities into a uniform and standardized application, e.g., display.

Client devices 310 can comprise any suitable type of network-enabled computing device, such as servers, desktop computers, laptop computers, handheld computers (e.g., smartphones, tablet computers), set top boxes, and network-enabled hard drives. Cloud resources 305 are typically provided and maintained by a service provider so that a client does not need to maintain resources on a local client device 310. In embodiments, cloud resources 305 can include one or more computing system 200 of FIG. 2 that is specifically adapted to perform one or more of the functions and/or processes described herein.

Cloud computing environment 300 can be configured such that cloud resources 305 provide computing resources to client devices 310 through a variety of service models, such as Software as a Service (SaaS), Platforms as a service (PaaS), Infrastructure as a Service (IaaS), and/or any other cloud service models. Cloud resources 305 can be configured, in some cases, to provide multiple service models to a client device 310 or computing systems 200, as shown in FIG. 2. For example, cloud resources 305 can provide both SaaS and IaaS to a client device 310. Cloud resources 305 can be configured, in some cases, to provide different service models to different client devices 310. For example, cloud resources 305 can provide SaaS to a first client device 310 and PaaS to a second client device 310.

Cloud computing environment 300 can be configured such that cloud resources 305 provide computing resources to client devices 310 through a variety of deployment models, such as public, private, community, hybrid, and/or any other cloud deployment model. Cloud resources 305 can be configured, in some cases, to support multiple deployment models. For example, cloud resources 305 can provide one set of computing resources through a public deployment model and another set of computing resources through a private deployment model.

In embodiments, software and/or hardware that performs one or more of the aspects, functions and/or processes described herein can be accessed and/or utilized by a client (e.g., an enterprise or an end user) as one or more of a SaaS, PaaS and IaaS model in one or more of a private, community, public, and hybrid cloud. Moreover, although aspects of the technical solutions described herein include a description of cloud computing, the systems and methods described herein are not limited to cloud computing and instead can be implemented on any suitable computing environment.

Cloud resources 305 can be configured to provide a variety of functionality that involves user interaction. Accordingly, a user interface (UI) can be provided for communicating with cloud resources 305 and/or performing tasks associated with cloud resources 305. The UI can be accessed via a client device 310 in communication with cloud resources 305. The UI can be configured to operate in a variety of client modes, including a fat client mode, a thin client mode, or a hybrid client mode, depending on the storage and processing capabilities of cloud resources 305 and/or client device 310. Therefore, a UI can be implemented as a standalone application operating at the client device in some embodiments. In other embodiments, a web browser-based portal can be used to provide the UI. Any other configuration to access cloud resources 305 can also be used in various implementations.

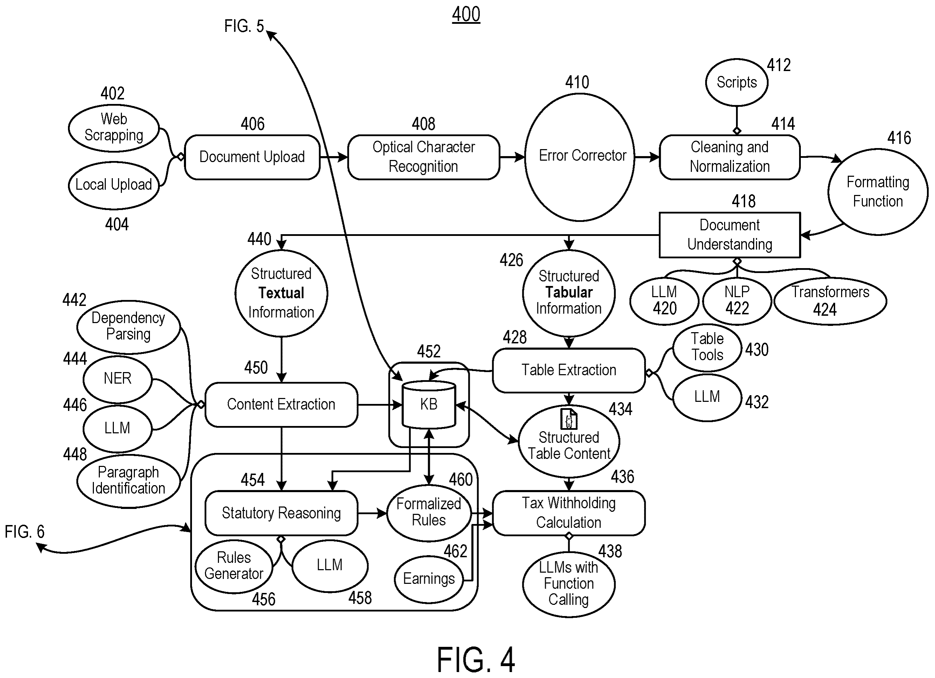

FIG. 4 illustrates an example flow diagram of a method 400 for providing automated payroll processing using ML models and operation protocols based on knowledge graph based rules. The method 400 can include acts 402-462 and can be implemented using example system components depicted in example systems 100-300 of FIGs. 1-3.

The acts of method 400 can be implemented in any order or sequence, with some acts being omitted or performed multiple times, depending on the implementation. In some examples, one or more of the acts of the method 400 can be performed in parallel, i.e., substantially simultaneously.

At act 402, the method can implement web scrapping, such as using a function to search the web for updates to documents describing payroll processes, such as for example documents for enterprise (e.g., corporate) tax or employee income tax computation. At act 404, upon identifying documents corresponding to the payroll processes, the method can include the system implementing a local upload.

At 406, the method can upload the documents and store them in a storage, such as a data repository. At 408, the method can implement an optical character recognition of the documents to identify the characters and words stated in the downloaded documents. At 410, the method can include or implement error detection to correct any errors. At 412 scripts can be initiated to implement a cleaning and normalization of the content at act 414. At 416, a formatting function can be implemented to format the content of the cleaned and normalized, error corrected documents.

At 418, the method can utilize various ML tools, such as by initiating LLM at 420, initiating NLP at 422 or initiating transformers at 424 to perform document understanding. During the document understanding process, the method can utilize the LLM, NLP and transformer functionalities to compute or determine the context and meaning of the documents and their content.

At 426, the method can process a structured tabular information to determine tabular content. At 428, table extraction can be performed using table tools initiated at 430 or LLMs initiated at 432. At 434, structured table content can be generated based on the table tools and LLMs. At 436, tax withholding calculation can be performed based on the structured table content. At 438, LLMs with function calling can be utilized to implement the transactions.

At 440, a structured textual format can be generated based on the document understanding at 418. For instance, the structured textual information can include contextual relations between various components (e.g., entities of the KG) and semantic edges (e.g., relationships). At 442, dependency parsing can be implemented. At 444, named entity recognition (NER) can be implemented using NLP model that identifies and categorizes information from unstructured text. At 446, LLM can be initiated to process the textual content. At 448, paragraph identification can be implemented. Based on actions 442-448, at 450, content extraction can be implemented and provided to the knowledge graph at 452 as well as to the statutory reasoning at 454.

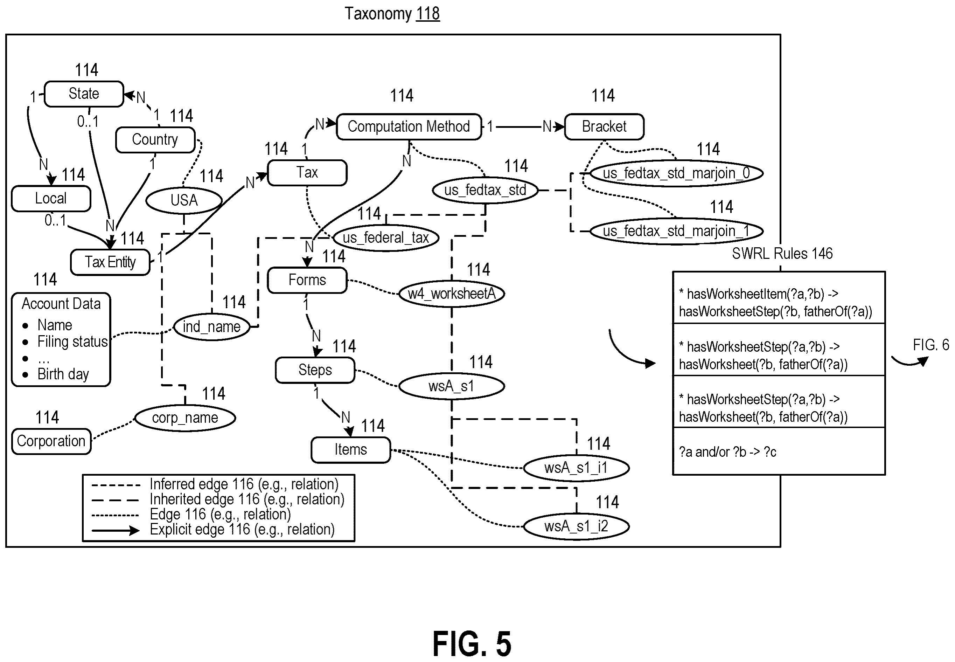

At 452, a knowledge base data structure can be generated or implemented. For instance, a knowledge base can be generated using ML models to construct a taxonomy (e.g., shown in FIG. 5) providing a description of the hierarchical and relational structure of components of the knowledge graph.

At 454, statutory reasoning can be implemented using ML models trained to determine contextual meaning from the extracted content with respect to the payroll processing rules and guidelines. At 456, rules generator can be implemented to generate rules based on the statutory reasoning (e.g., according to payroll processing protocols to utilize for payroll operations). At 458, LLMs can be utilized for rules generation and statutory reasoning. At 460 formalized rules can be provided to the tax withholding calculation (436). The tax withholding calculation (436) can be performed by any transactions processors. At 462, earnings (e.g., accounts data or metadata relating to the accounts) can be provided to the tax withholding calculation to implement the operation according to the accounts data or metadata and according to the rules generated from the statutory reasoning based on the knowledge graph and its taxonomy.

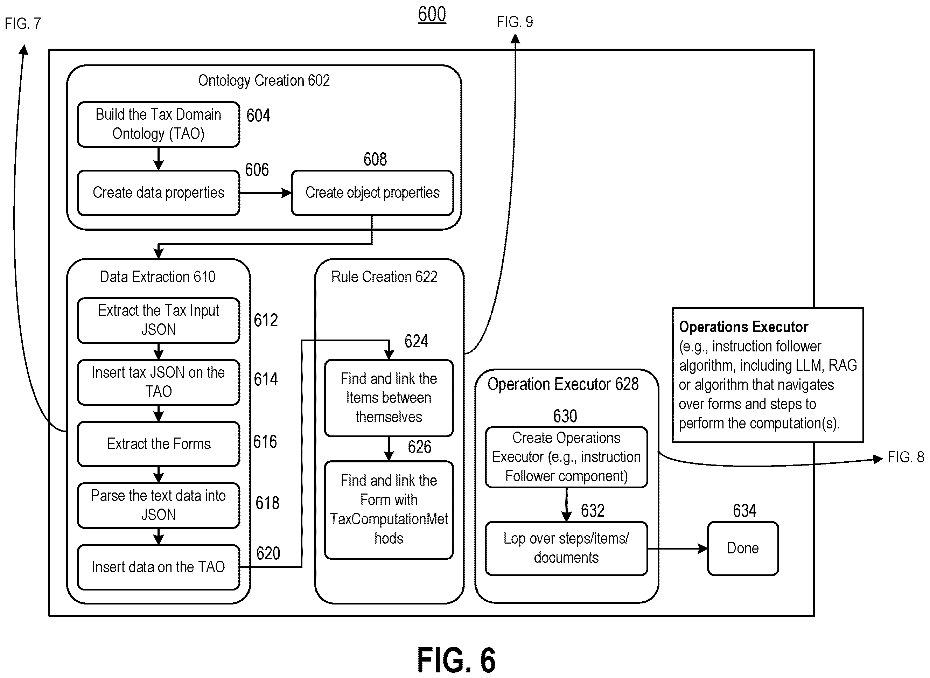

FIG. 5 illustrates an example of a taxonomy 118 corresponding to a knowledge graph 452 in FIG. 4. The payroll taxonomy 118 can be constructed using various components (e.g., entities), such as corporation (e.g., corporation type), account data (e.g., name, filing status, birthday), tax entity, country, state, corporation name, computation methods (e.g., US federal tax, U.S. federal standard tax, U.S. W4 worksheet), forms, steps, tax brackets, and other features. The payroll taxonomy can also have the components 114 interconnected using edges 116 of various types. For instance, edges can include inferred edges (e.g., inferred based on machine learning contextual analysis), inherited edges (e.g., passed down from prior documents), or explicit edges that are explicitly stated or defined. Edges 116 can also include edges generated based on a combination of factors (e.g., inferred and inherited). The taxonomy 118 can be used to generate rules 146, such as semantic web rule language (SWRL) rules that can be coded, based on the taxonomy 118, and be used as inputs into operations described in connection with FIG. 6, such as for ontology creation.

FIG. 6 illustrates an example flow diagram of a method 600 for ontology creation and data extraction of method in FIG. 4. The method 600 can correspond to actions implemented in relation to acts 454-462 of method 400 in FIG. 4. The method can include acts 602-634 and can be implemented using example system components depicted in example systems 100-300 of FIGs. 1-3. The acts of method 600 can be implemented in any order or sequence, with some acts being omitted or performed multiple times, depending on the implementation. In some examples, one or more of the acts can be performed in parallel, i.e., substantially simultaneously.

At 602, an ontology creation process can be initiated. The ontology creation can initiate functionalities or operations for systematic development of a formal representation that defines the concepts, categories, properties, and relationships relevant to payroll processing. At 604, tax domain ontology can be created or built. The tax domain ontology can include creating a structured framework of rules and relationships relevant to tax regulation and practices to be used for payroll operations related to taxation. At 606, data properties can be created. For instance, creating data properties can include defining attributes that hold specific types of data related to entities in an ontology, such as numerical values or strings that describe characteristics of those entities. At 608, object properties can be created. For instance, the method can establish relationships between different components (e.g., entities) in an ontology, allowing for the representation of how these entities interact or are associated with one another.

At 610, the method can implement data extraction. The data extraction can include the process of retrieving specific information from various sources, such as documents on tax processing guidelines. At 612, tax input JSON can be extracted. For instance, the method can retrieve structured data formatted in JSON that includes relevant tax information from a specified source. At 614, the tax JSON can be inserted on the tax domain ontology. For example, the extracted tax-related data in JSON format can be added into the structured format of the tax domain ontology. At 616, the forms can be extracted. For instance, specific tax forms can be retrieved from a collection of documents of a dataset. At 618, the data can be inserted into the tax domain ontology. For example, the new information or updates to the tax domain ontology can be added in order to update the ontology.

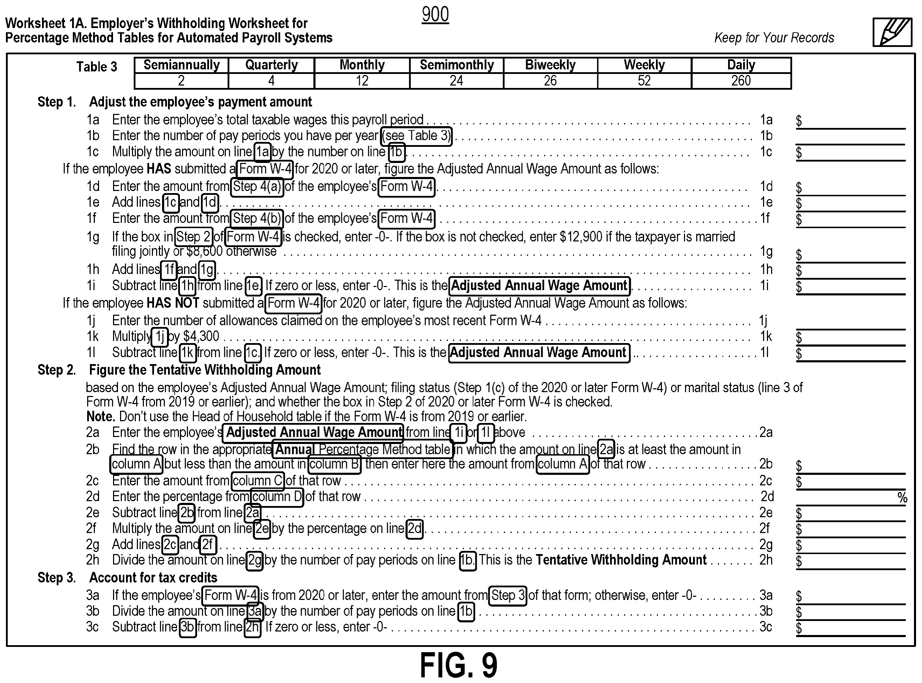

At 622, the method can initiate a rule creation process. The rule creation process can include defining specific guidelines and conditions that dictate how certain operations or decisions should be executed with a system. At 624, the method can include finding and linking the items between themselves. For instance, the method can include identifying related components within a dataset or system and establishing connections or relationships among them to enhance data integration and usability. At 626, the method can include finding and linking the form with tax computation methods. For instance, the method can include associating specific tax forms with the relevant computational methods used to calculate tax obligations and to implement accurate processing and compliance with regulations. The output of these forms can be provided in the format, as shown in FIG. 9.

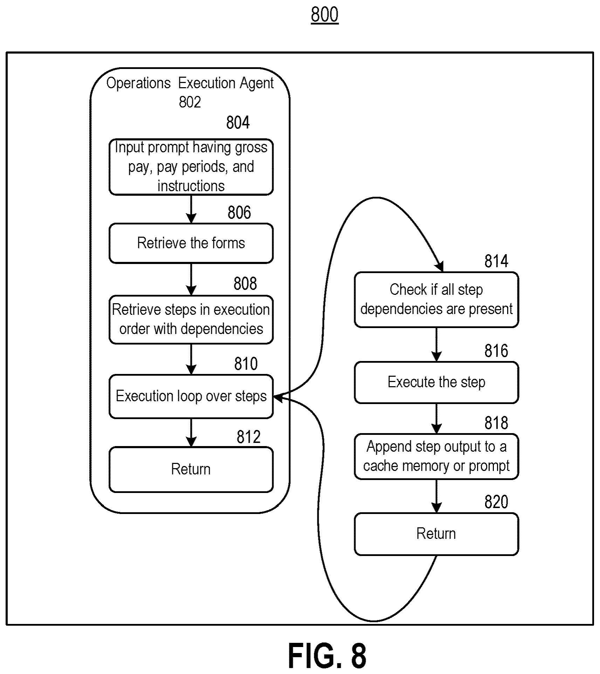

At 628, the method can initiate the operation execution component, which prepares the system to carry out defined tasks based on established rules and parameters. The operations executor can include or utilize various ML features, such as LLM, RAG, or algorithms that navigate over forms and steps to perform computations. At 630, method can create operations executor. For instance, the method can define and set up tasks or processes to be executed within the system, ensuring that all necessary conditions and resources are in place for successful operation implementation. At 632, the method can read the steps, items, and documents and provide instructions for operation execution at FIG. 8. For example, the method can iterate through various components, such as systems, items, or documents, to perform operations or analyses on each one in a systematic manner to validate comprehensive processing and integration. At 634, the method 600 can end.

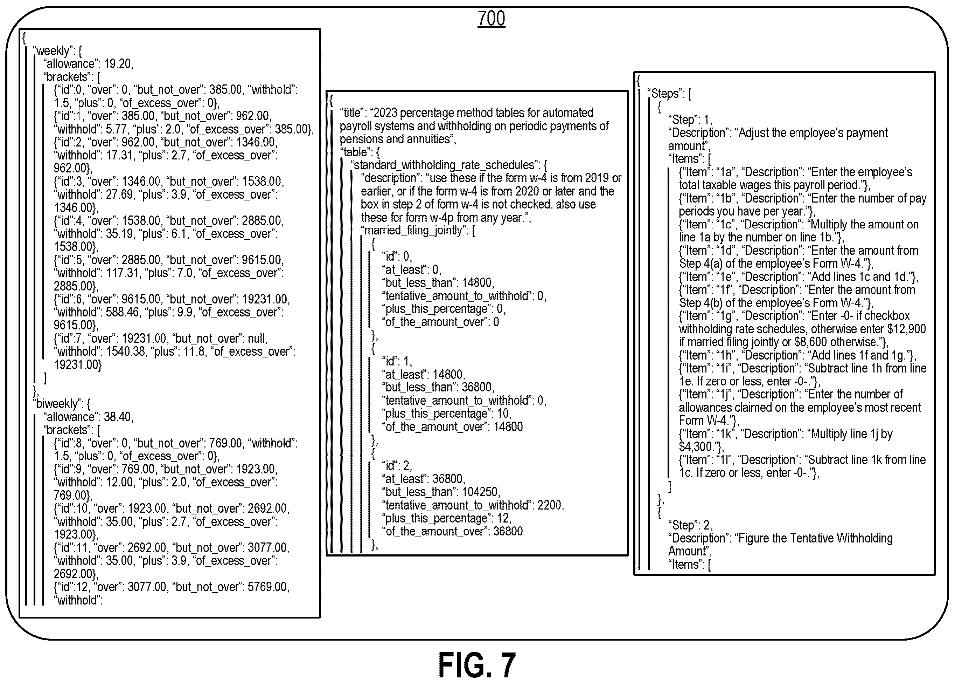

FIG. 7 illustrates an example user interface screenshots 700 of the process involving an act of data extraction 610 at FIG. 6. The user interface screenshots 700 can include JSON code displayed on user interface windows according to the actions implemented in connection with acts 610-620 of FIG. 6.

FIG. 8 illustrates an example flow diagram of a method 800 for execution of operations according to the embodiments of method at FIG. 4. The method 800 can correspond to actions implemented in relation to, or responsive to, acts 628-632 of method 600 in FIG. 6. The method can include acts 802-820 and can be implemented using example system components depicted in example systems 100-300 of FIGs. 1-3. The acts of method 800 can be implemented in any order or sequence, with some acts being omitted or performed multiple times, depending on the implementation. In some examples, one or more of the acts can be performed in parallel, i.e., substantially simultaneously.

At 802, the operations execution agent can be initiated to implement or manage the execution of the operation, along with all of its transactions. At 804, the input prompt having gross pay, pay period, and instructions can be provided. For instance, the initial data can be provided to the operations execution agent, including any information and directives used to carry out the payroll transactions of the operation. At 804, the forms can be retrieved, including any tax or payroll forms used. At 806, the steps in execution order with dependencies can be retrieved. For instance, method 800 can identify and organize the sequence of tasks to be executed. At 810, the execution loop over steps can be implemented, such as, for example, implementing an iterative set of defined steps. For instance, at 814, the method can check if all step dependencies are present. At 816, the method can execute the step. At 818, the method can append step output to a cache memory or prompt. At 820, the execution of the step can be returned. At 812, once all steps are executed, the final output of the operation can be returned to the function.

FIG. 9 illustrates an example of a form 900 of a worksheet with instructions or steps for implementing the payroll operation in connection with method at FIG 4. The from 900 can include entries and descriptions of entries to be populated or computed using transactions of the give operation, in accordance with the protocol for the operation. The form 900 can include instructions describing which components (e.g., entities) of the form to compute prior to others, providing the semantic edge (e.g., hierarchical or temporal relationship) between different entities of the form. The form 900 can be used as a reference or a guide to follow in execution of the operation.

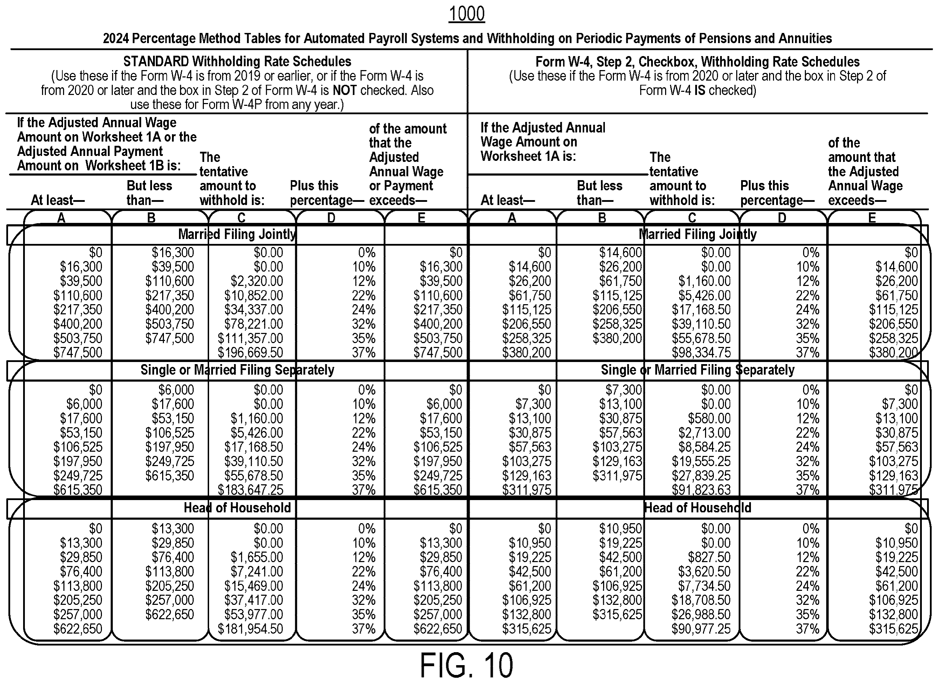

FIG. 10 illustrates an example of a form 1000 with computed and finalized payroll operation outputs based on the method at FIG. 4. Form 1000 can include the final outputs of the transactions and can represent the result of the operation. The form 1000 can include various entries with entered values that are computed using the functionalities of the data processing system described herein. For instance, operations implemented using protocols updated or established based on the rules updated to reflect knowledge graph can be implemented, reflecting the values and parameters computed and presented in the form 1000.

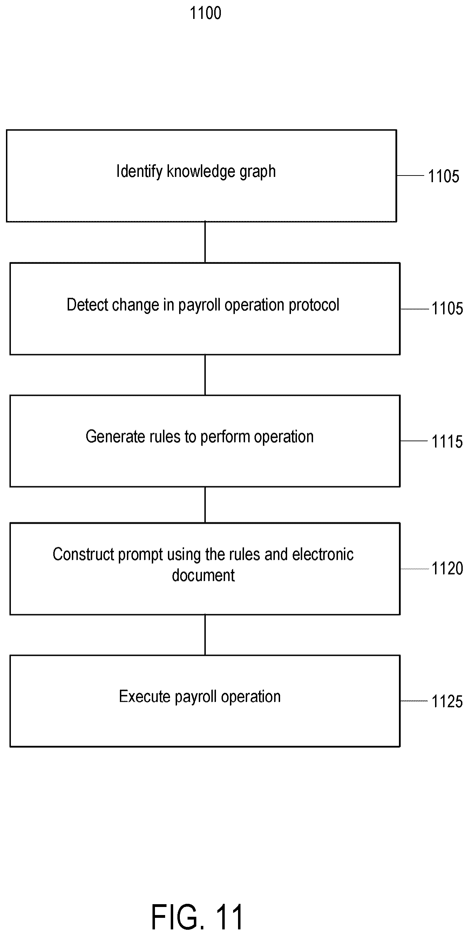

FIG. 11 depicts a method 1100 for providing automated payroll processing using machine learning and knowledge graph based rules. The method 1100 can be performed using one or more systems, features, acts or components depicted or discussed in connection with FIGs. 1-10. For instance, method 1100 can be implemented, for example, using a data processing system 105 of FIG. 1 implemented on a computing system 200 of FIG. 2 or on a cloud computing environment 300 of FIG. 3. For instance, the method 1100 can be implemented by one or more processors 215 executing operations based on instructions and data stored in a system memory 225, where the instructions can cause the one or more processors 215 to implement any functionality of the data processing system 105 and its components. The method 500 can include any acts be implemented in any order sequence or combination with potentially additional acts, some of which can overlap in time, and one or more of which can be omitted in various contemplated implementations. The method 1100 can include acts or operations 1105-1025. At 1105, the method can include identifying knowledge graph. At 1110, the method can detect a change in a payroll operation protocol. At 1115, the method can generate rules to perform operation. At 1120, the method can construct prompt using the rules and electronic documents. At 1125, the method can execute the payroll operation.

At 1105, the method can include identifying knowledge graph. The method can include one or more processors coupled with memory identifying a knowledge graph data structure, also referred to as the knowledge graph. The knowledge graph data structure can connect, using semantic edges, a plurality of components in accordance with a taxonomy. The knowledge graph can include a plurality of components (e.g., entities) corresponding to various features or acts that are to be implemented, executed or established during the course of an operation, such as an income tax computation for an employee associated with an electronic account. The operation can be any plurality of transactions ordered or arranged according to a protocol of a plurality of rules defining the arrangement of the transactions. The operation can be any operation, such as: processing employee salaries, calculating tax withholdings, managing benefit deductions, executing direct deposit payments, generating payroll reports, handling overtime calculations, reconciling payroll discrepancies, issuing year-end tax forms, updating employee records, and administering wage garnishments. The knowledge graph data structure can be represented in a JavaScript Object Notation (JSON) format. For instance, the components and the semantic edges can be represented using JSON objects, YMAL, RDF or any other knowledge graph supporting tools.

The components (e.g., entities of the knowledge graph) can include portions of documents corresponding to, or describing, processing of a payroll operation (e.g., processing of taxes) for an electronic account of a plurality of electronic accounts electronic accounts associated with the system. The electronic account can correspond to at least one of an enterprise or an employee of the enterprise and can include information or data, including metadata, about the account or the user or an entity (e.g., employee or enterprise) associated with the account. The information or data can include, for example, income amounts, bank account information, investment settings, such as retirement account investment settings or preferences, or any other information about the user or entity of the account.

The semantic edges can include information, data structure (e.g., object), or data defining or describing any relations or relationships between various components of the knowledge graph. The semantic images can include or state relations between components that are explicitly stated, inferred from documents (e.g., using ML models), or inherited from prior documentation or processes. The semantic edges can include at least one of: a hierarchical semantic edge determined based on a hierarchy of two or more components, a causal semantic edge representing a cause-and-effect relationship between two or more components, or a temporal semantic edge indicative of a timing of events corresponding to two or more components.

The method can identify or utilize one or more machine learning (ML) models trained on a dataset of a plurality of documents for performing a plurality of electronic transactions according to a plurality of protocols. The one or more ML models can be configured and used to generate, using the one or more ML models, the knowledge graph data structure. For instance, an ML model can be used to process documents from the incoming dataset, generate components and edges of the knowledge graph, generate the knowledge graph and update the knowledge graph based on the received documents.

For instance, the method can include the one or more processors identifying a dataset comprising documents for electronic transactions for a plurality of payroll operations. The method can determine, using the dataset, the components corresponding to electronic transactions for each of the plurality of payroll operations. The method can determine, using the dataset, the semantic edges defining relationships between the components. The method can generate, using the components and the semantic edges, the knowledge graph data structure for the plurality of payroll operations. For instance, the knowledge graph can be generated using the ML models.

At 1110, the method can detect a change in a payroll operation protocol. The method can include the one or more processors detecting, using the knowledge graph data structure, a change to a protocol used to perform an operation comprising one or more electronic transactions between electronic accounts related to the plurality of components. For example, a protocol change detector can monitor databases with payroll processing laws, rules, and guidelines and download new or updated documents. For instance, using ML models (e.g., LLMs, NLPs, and transformers), the protocol change detector can identify document portions having subject matter or features not previously included in the knowledge graph. The protocol change detector can identify that the features of the new or updated documents affect one or more protocols for processing one or more operations.

The change to the protocol can include a change to the arrangement or order of transactions to be implemented in order to complete the operation. The change to the protocol can include a change in the selection of the transactions to be implemented in order to complete the operation. The change to the protocol can include an adjustment in the timing or frequency of transaction processing to optimize system performance and resource utilization. The change to the protocol can include an update to a criteria used for validating transactions before they are executed in order to validate compliance with new regulations. The change to the protocol can include the introduction of additional transactions. The change to the protocol can include modifications to the data formats used for input or output.

For instance, the one or more processors can receive a document including updated regulations impacting the electronic transactions. The one or more processors can identify, based on the document, the change to the protocol. For instance, the protocol change detector can utilize an ML model to generate vector representations of the document portions of the new or updated documents. The protocol change detector can utilize the knowledge graph generator to compare these vector representations of the new documents and their components with the vector representations of the knowledge graph (e.g., embeddings of the components or edges). Using these comparisons, the protocol change detector or the knowledge graph generator can identify which of the document portions are not similar (e.g., within a similarity threshold) with the features (e.g., components or edges) of the knowledge graph. In response to identifying such dissimilar document portions, the protocol change detector or the knowledge graph generator can determine to update the knowledge graph with the new material.

The method can include identifying a document for performing one or more electronic transactions that are not included in the plurality of documents. The method can include updating, based on the document input into the one or more ML models, the knowledge graph data structure. For instance, the knowledge graph generator can utilize one or more ML models to generate new or update the existing components or edges of the knowledge graph based on the updated received documents.

At 1115, the method can generate rules to perform the given operation. The method can include the one or more processors generating one or more rules to perform the operation in accordance with the change to the protocol. The one or more rules can be generated using the knowledge graph data structure. The one or more rules can be generated responsive to detection of the change to the protocol. The rules generator can generate one or more rules responsive to a change in the type or order of transactions to be implemented to complete a particular operation. The rules generated can conform the protocol for implementing such a transaction according to the type or order of transactions to be implemented in accordance with the modified documents (e.g., laws, rules, or guidelines for processing the given payroll transaction). The one or more rules generated can include any rules, such as a rule that certain benefits are available if the user associated with the account has a specific job title, a rule that a tax form filling out operation is to be implemented for any transaction exceeding a defined monetary threshold, or to apply a certain tax calculation if an employee's gross pay exceeds a certain amount.

The method can include identifying, based on the document, the change to the protocol. For instance, one or more ML models can be utilized to recognize and detect changes in the protocol. The one or more ML models can apply a semantic search between vector representations (e.g., embeddings) of different portions (e.g., paragraphs, sentences, tables, concepts) of new or updated documents with vector representations (e.g., embeddings) of the components or edges of the knowledge graph. Based on the identified differences between the knowledge graph and the document portions, the one or more ML models can identify or detect one or more changes to the protocol. The method can include updating the knowledge graph based on the identified change. Updating the knowledge graph can include generating one or more new components or semantic edges, removing one or more components or semantic edges, or adjusting or updating one or more new components or semantic edges in order to include the content of the new or updated document portions in the knowledge graph.

The method can include generating a user interface for interacting with the knowledge graph data structure. For instance, the one or more processors can receive, via the user interface, an adjustment to at least one of a component of the plurality of components or a semantic edge of the semantic edges defining relationships between the plurality of components. The method can update, based on the adjustment, the knowledge graph data structure. The method can display the updated knowledge graph data structure via the user interface.

At 1120, the method can construct a prompt using the rules and electronic documents. The method can include the one or more processors constructing a prompt with the one or more rules and at least a portion of an electronic document. For instance, the prompts generator can construct one or more prompts for one or more ML models in response to one or more rules being generated or in response to the knowledge graph being updated. For instance, the prompts generator can generate a prompt using one or more rules generated or updated at 1115 and using one or more document portions corresponding to the new or modified content from which the one or more rules were generated or updated. The prompt can include instructions for an ML model to generate a new protocol for the operation based on the new or updated one or more rules and the corresponding one or more document portions. For instance, the prompt can include instructions for an ML model to generate a new selection, order, or arrangement of transactions for the given operation based on the one or more rules and the one or more document portions. For instance, the prompt can include instructions for an ML model to execute the operation according to a new or updated protocol that is adjusted based on the new or updated one or more rules or the one or more document portions.

The one or more processors can identify metadata corresponding to an electronic account for which the operation is to be executed. The one or more processors can identify, based on the metadata, one or more components from the plurality of components that correspond to the operation for the electronic account. The one or more processors can construct the prompt, using the metadata and the one or more components, for the operation to be executed. For instance, the prompt can instruct one or more ML models to execute the operation based on the one or more rules, the one or more document portions and one or more metadata or information corresponding to the electronic account.

The method can include the one or more processors identifying a geographical area corresponding to an electronic account of the electronic accounts. The one or more processors can select the protocol responsive to a match of a geographical data of the protocol with the geographical area corresponding to the electronic account. The knowledge graph data structure can include components and semantic edges corresponding to a plurality of protocols comprising the protocol. The plurality of protocols for operations can correspond to a plurality of geographical areas comprising the geographical area. The selected protocol can be selected based on the geographical area indicated in the electronic account or metadata of the user matching the geographical area of the protocol.

At 1125, the method can execute the payroll operation. The method can include the one or more processors executing the operation based on the prompt. For example, the operations executor can execute the operation based on the prompt and using a model trained with a generative machine learning technique. The prompt having a newly generated or adjusted rule and a document portions identifying a changes to the payroll operation can be input into the ML model and cause the ML model to execute the operation according to the new rule and the document portion. The prompt with the new rule and the document portion input into the ML model can cause the ML model to generate an updated or a new protocol for executing a new selection, order or arrangement of transactions according to the new rules or document portions.

The method can include a transactions processor processing the transactions of the operation according to an updated or a new protocol that is generated based on the one or more rules and the document portion. The transactions processor can implement the new or updated protocol by executing a new selection, arrangement, or order of transactions defined by the newly generated or updated one or more rules. The method can include the transactions processor output the result of the processing of the operation. The result can include a payroll form that includes entries filled in based on the values determined according to the data of the electronic account or metadata associated with the account and according to the newly generated or updated one or more rules and the document portion. The result can be displayed on the client device via a user interface. For instance, an employee tax form can be provided for display on a display of the client device via a user interface showing a window displaying the form with the values generated based on the transactions implemented during the operation performed according to the updated or newly generated protocol, reflecting the changes to the knowledge graph and the newly generated or updated one or more rules.

Although an example computing system has been described in FIG. 2, the subject matter including the operations described in this specification can be implemented in other types of digital electronic circuitry, or computer software, firmware, or hardware, cloud-based systems, or in any structures described in this specification and their structural equivalents, or combinations of one or more of them.

Some of the description herein emphasizes the structural independence of the aspects of the system components or groupings of operations and responsibilities of these system components. Other groupings that execute similar overall operations are within the scope of the present application. Modules can be implemented in hardware or as computer instructions on a non-transient computer readable storage medium, and modules can be distributed across various hardware or computer-based components.

The systems described above can provide multiple ones of any or each of those components, and these components can be provided on either a standalone system or on multiple instantiations in a distributed system. In addition, the systems and methods described above can be provided as one or more computer-readable programs or executable instructions embodied on or in one or more articles of manufacture. The article of manufacture can be cloud storage, a hard disk, a CD-ROM, a flash memory card, a PROM, a RAM, a ROM, or a magnetic tape. In general, the computer-readable programs can be implemented in any programming language, such as LISP, PERL, C, C++, C#, PROLOG, or in any byte code language such as JAVA. The software programs or executable instructions can be stored on or in one or more articles of manufacture as object code.

The subject matter and the operations described in this specification can be implemented in digital electronic circuitry, or in computer software, firmware, or hardware, including the structures described in this specification and their structural equivalents, or in combinations of one or more of them. The subject matter described in this specification can be implemented as one or more computer programs, e.g., one or more circuits of computer program instructions, encoded on one or more computer storage media for execution by, or to control the operation of, data processing apparatuses. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. While a computer storage medium is not a propagated signal, a computer storage medium can be a source or destination of computer program instructions encoded in an artificially generated propagated signal. The computer storage medium can also be, or be included in, one or more separate components or media (e.g., multiple CDs, disks, or other storage devices include cloud storage). The operations described in this specification can be implemented as operations performed by a data processing apparatus on data stored on one or more computer-readable storage devices or received from other sources.

The terms "computing device", "component" or "data processing apparatus" or the like encompass various apparatuses, devices, and machines for processing data, including by way of example a programmable processor, a computer, a system on a chip, or multiple ones, or combinations of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, app, script, or code) can be written in any form of programming language, including compiled or interpreted languages, declarative or procedural languages, and can be deployed in any form, including as a stand-alone program or as a module, component, subroutine, object, or other unit suitable for use in a computing environment. A computer program can correspond to a file in a file system. A computer program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatuses can also be implemented as, special purpose logic circuitry, e.g., an FPGA (field programmable gate array) or an ASIC (application specific integrated circuit). Devices suitable for storing computer program instructions and data can include non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

The subject matter described herein can be implemented in a computing system that includes a back end component, e.g., as a data server, or that includes a middleware component, e.g., an application server, or that includes a front end component, e.g., a client computer having a graphical user interface or a web browser through which a user can interact with an implementation of the subject matter described in this specification, or a combination of one or more such back end, middleware, or front end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While operations are depicted in the drawings in a particular order, such operations are not required to be performed in the particular order shown or in sequential order, and all illustrated operations are not required to be performed. Actions described herein can be performed in a different order.

Having now described some illustrative implementations, it is apparent that the foregoing is illustrative and not limiting, having been presented by way of example. In particular, although many of the examples presented herein involve specific combinations of method acts or system elements, those acts and those elements may be combined in other ways to accomplish the same objectives. Acts, elements and features discussed in connection with one implementation are not intended to be excluded from a similar role in other implementations or implementations.

The phraseology and terminology used herein is for the purpose of description and should not be regarded as limiting. The use of "including" "comprising" "having" "containing" "involving" "characterized by" "characterized in that" and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular may also embrace implementations including a plurality of these elements, and any references in plural to any implementation or element or act herein may also embrace implementations including only a single element. References in the singular or plural form are not intended to limit the presently described systems or methods, their components, acts, or elements to single or plural configurations. References to any act or element being based on any information, act or element may include implementations where the act or element is based at least in part on any information, act, or element.

Any implementation described herein may be combined with any other implementation or embodiment, and references to "an implementation," "some implementations," "one implementation" or the like are not necessarily mutually exclusive and are intended to indicate that a particular feature, structure, or characteristic described in connection with the implementation may be included in at least one implementation or embodiment. Such terms as used herein are not necessarily all referring to the same implementation. Any implementation may be combined with any other implementation, inclusively or exclusively, in any manner consistent with the aspects and implementations described herein.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

Where technical features in the drawings, detailed description or any claim are followed by reference signs, the reference signs have been included to increase the intelligibility of the drawings, detailed description, and claims. Accordingly, neither the reference signs nor their absence have any limiting effect on the scope of any claim elements.

Modifications of described elements and acts such as substitutions, changes and omissions can be made in the design, operating conditions and arrangement of the described elements and operations without departing from the scope of the technical solutions described herein.

References to "approximately," "substantially", or other terms of degree include variations of +/-10% from the given measurement, unit, or range unless explicitly indicated otherwise. Coupled elements can be electrically, mechanically, or physically coupled with one another directly or with intervening elements. Scope of the Systems and methods described herein is thus indicated by the appended claims, rather than the foregoing description, and changes that come within the meaning and range of equivalency of the claims are embraced therein.

## Claims

1. A system comprising:
one or more processors, coupled with memory, to:
identify a knowledge graph data structure that connects, using semantic edges, a plurality of components in accordance with a taxonomy;
detect, using the knowledge graph data structure, a change to a protocol used to perform an operation comprising one or more electronic transactions between electronic accounts related to the plurality of components;
generate, using the knowledge graph data structure, responsive to detection of the change, one or more rules to perform the operation in accordance with the change to the protocol;
construct a prompt with the one or more rules and at least a portion of an electronic document; and
execute, using a model trained with a generative machine learning technique, the operation based on the prompt.

2. The system of claim 1, wherein the one or more processors are further configured to:
identify a dataset comprising documents for electronic transactions for a plurality of payroll operations;
determine, using the dataset, the components corresponding to electronic transactions for each of the plurality of payroll operations;
determine, using the dataset, the semantic edges defining relationships between the components; and
generate, using the components and the semantic edges, the knowledge graph data structure for the plurality of payroll operations.

3. The system of claim 1 or 2, wherein the one or more processors are further configured to:
identify metadata corresponding to an electronic account for which the operation is to be executed;
identify, based on the metadata, one or more components from the plurality of components that correspond to the operation for the electronic account; and
construct the prompt, using the metadata and the one or more components, for the operation to be executed.

4. The system of any preceding claim, wherein the plurality of components includes portions of documents corresponding to processing of taxes for an electronic account of the electronic accounts, the electronic account corresponding to at least one of an enterprise or an employee of the enterprise; and/or
wherein the semantic edges include at least one of: a hierarchical semantic edge determined based on a hierarchy of two or more components, a causal semantic edge representing a cause-and-effect relationship between two or more components, or a temporal semantic edge indicative of a timing of events corresponding to two or more components; and/or
wherein the knowledge graph data structure is represented in a JavaScript Object Notation (JSON) format and the components and the semantic edges are represented using JSON objects.

5. The system of any preceding claim, wherein the one or more processors are further configured to:
receive a document including updated regulations impacting the electronic transactions; and
identify, based on the document, the change to the protocol; and
update the knowledge graph data structure based on the identified change.

6. The system of any preceding claim, wherein the one or more processors are further configured to:
generate a user interface for interacting with the knowledge graph data structure;
receive, via the user interface, an adjustment to at least one of a component of the plurality of components or a semantic edge of the semantic edges defining relationships between the plurality of components;
update, based on the adjustment, the knowledge graph data structure; and
display the updated knowledge graph data structure via the user interface.

7. The system of any preceding claim, wherein the one or more processors are further configured to:
identify one or more machine learning (ML) models trained on a dataset of a plurality of documents for performing a plurality of electronic transactions according to a plurality of protocols;
generate, using the one or more ML models, the knowledge graph data structure; and optionally
wherein the one or more processors are further configured to:
identify a document for performing one or more electronic transactions that is not included in the plurality of documents;
update, based on the document input into the one or more ML models, the knowledge graph data structure.

8. The system of any preceding claim, wherein the one or more processors are further configured to:
identify a geographical area corresponding to an electronic account of the electronic accounts; and
select the protocol responsive to a match of a geographical data of the protocol with the geographical area corresponding to the electronic account; and optionally
wherein the knowledge graph data structure includes components and semantic edges corresponding to a plurality of protocols comprising the protocol, the plurality of protocols for operations corresponding to a plurality of geographical areas comprising the geographical area.

9. A method, comprising
identifying, by one or more processors coupled with memory, a knowledge graph data structure that connects, using semantic edges, a plurality of components in accordance with a taxonomy;
detecting, by the one or more processors, using the knowledge graph data structure, a change to a protocol used to perform an operation comprising one or more electronic transactions between electronic accounts related to the plurality of components;
generating, by the one or more processors, using the knowledge graph data structure, responsive to detection of the change, one or more rules to perform the operation in accordance with the change to the protocol;
constructing, by the one or more processors, a prompt with the one or more rules and at least a portion of an electronic document; and
causing, by the one or more processors, using a model trained with a generative machine learning technique, execution of the operation based on the prompt.

10. The method of claim 9, comprising:
identifying, by the one or more processors, a dataset comprising documents for electronic transactions for a plurality of payroll operations;
determining, by the one or more processors, using the dataset, the components corresponding to electronic transactions for each of the plurality of payroll operations;
determining, by the one or more processors, using the dataset, the semantic edges defining relationships between the components; and
generating, by the one or more processors, using the components and the semantic edges, the knowledge graph data structure for the plurality of payroll operations.

11. The method of claim 9 or 10, comprising:
identifying, by the one or more processors, metadata corresponding to an electronic account for which the operation is to be executed;
identifying, by the one or more processors, based on the metadata, one or more components from the plurality of components that correspond to the operation for the electronic account; and
constructing, by the one or more processors, the prompt, using the metadata and the one or more components, for the operation to be executed.

12. The method of any of claims 9 to 11, comprising:
receiving, by the one or more processors, a document including updated regulations impacting the electronic transactions; and
identifying, by the one or more processors, based on the document, the change to the protocol; and
updating, by the one or more processors, the knowledge graph data structure based on the identified change.

13. The method of any of claims 9 to 12, comprising:
generating, by the one or more processors, a user interface for interacting with the knowledge graph data structure;
receiving, by the one or more processors, via the user interface, an adjustment to at least one of a component of the plurality of components or a semantic edge of the semantic edges defining relationships between the plurality of components;
updating, by the one or more processors, based on the adjustment, the knowledge graph data structure; and
displaying, by the one or more processors, the updated knowledge graph data structure via the user interface.

14. The method of any of claims 9 to 13, comprising:
identifying, by the one or more processors, one or more machine learning (ML) models trained on a dataset of a plurality of documents for performing a plurality of electronic transactions according to a plurality of protocols;
generating, by the one or more processors, using the one or more ML models, the knowledge graph data structure; and/or.
the method of comprising:
identifying, by the one or more processors, a document for performing one or more electronic transactions that is not included in the plurality of documents;
updating, by the one or more processors, based on the document input into the one or more ML models, the knowledge graph data structure.

15. A non-transient computer readable medium comprising processor readable instructions which, when executed by one or more processors, cause the one or more processors to carry out the method of any of claims 9 to 14.
